# EUROPEAN PATENT APPLICATION

(11) **EP 4 701 099 A1**
(43) Date of publication of application: **25.02.2026**
(21) Application number: 23933526.8
(22) Date of filing: 21.04.2023
(51) Int. Cl.: H04B 7/22

(54) **WIRELESS SENSING METHOD AND APPARATUS, COMMUNICATION DEVICE, COMMUNICATION SYSTEM AND STORAGE MEDIUM**

(71) Applicant: Beijing Xiaomi Mobile Software Co., Ltd., Beijing 100085 (CN)
(72) Inventor: ZHAO, Qun, Beijing 100085 (CN)
(74) Representative: Dehns Germany Partnerschaft mbB
(86) International application number: PCT/CN2023/089947
(87) International publication number: WO 2024/216650

(57) **Abstract**

The present disclosure relates to a wireless sensing method and apparatus, a communication device, a communication system and a storage medium, the method being executable by a receiver. The method comprises: acquiring first information, the first information being used to indicate a sensing channel state; receiving a first reference signal sent by a transmitter 102; sensing a sensing target according to the first reference signal and the first information. In this way, clutter affecting sensing in a received signal of the first reference signal can be effectively eliminated on the basis of the sensing channel state, effectively improving the accuracy of sensing the sensing target.

## Description

### TECHNICAL FIELD

The present disclosure relates to the technical field of communication, and in particular, to a wireless sensing method and apparatus, a communication device, a communication system, and a storage medium.

### BACKGROUND

The wireless communication technology and the wireless sensing technology are highly similar. The integrated sensing and communication (ISAC) can combine the wireless communication and the wireless sensing, and introduce close cooperation between the two, thereby improving the spectrum efficiency and reducing network deployment costs. In wireless sensing, it typically requires estimating the distance, azimuth angle (such as horizontal angle and vertical angle), and speed of the sensing target. In a broad sense, sensing also includes wireless tracking and radio frequency identification of the sensing target.

### SUMMARY

The embodiments of the present disclosure provide a wireless sensing method and apparatus, a communication device, a communication system, and a storage medium.

According to a first aspect of the embodiments of the present disclosure, a wireless sensing method is provided, and the method includes:
obtaining first information, where the first information is used to indicate a sensing channel state;
receiving a first reference signal sent by a transmitter; and
sensing a sensing target according to the first reference signal and the first information.

According to a first aspect of the embodiments of the present disclosure, a wireless sensing method is provided, which is performed by a transmitter. The method includes:
sending a first reference signal, where the first reference signal is used by a receiver to sense a sensing target according to the first reference signal and first information, where the first information is used to indicate a sensing channel state.

According to a third aspect of the embodiments of the present disclosure, a wireless sensing method is provided, which is performed by a sensing target. The method includes:
sending a second reference signal, where the second reference signal is used by a receiver to measure the second reference signal to obtain first information, where the first information is used to indicate a sensing channel state, and the first information is further used by the receiver to sense the sensing target; or
receiving at least one third reference signal, measuring the at least one third reference signal to obtain the first information, and sending the first information, where the third reference signal is sent by a transmitter.

According to a fourth aspect of the embodiments of the present disclosure, a wireless sensing method is provided, which is applied to a communication system. The communication system includes a receiver and a transmitter, and the method includes:
obtaining, by the receiver, first information, where the first information is used to indicate a sensing channel state;
sending, by the transmitter, a first reference signal; and
sensing, by the receiver, the sensing target according to the first reference signal and the first information.

According to a fifth aspect of the embodiments of the present disclosure, a first wireless sensing apparatus is provided, and the apparatus includes:
an obtaining module, configured to obtain first information, where the first information is used to indicate a sensing channel state;
a receiving module, configured to receive a first reference signal sent by a transmitter; and
a sensing module, configured to sense a sensing target according to the first reference signal and the first information.

According to a sixth aspect of the embodiments of the present disclosure, a second wireless sensing apparatus is provided, and the apparatus includes:
a sending module, configured to send a first reference signal, where the first reference signal is used by a receiver to sense a sensing target according to the first reference signal and first information, where the first information is used to indicate a sensing channel state.

According to a seventh aspect of the embodiments of the present disclosure, a third wireless sensing apparatus is provided, and the apparatus includes:
a first sending module, or a receiving module and a measuring module and a second sending module;
the first sending module is configured to send a second reference signal, where the second reference signal is used by a receiver to measure the second reference signal to obtain first information, where the first information is used to indicate a sensing channel state, and the first information is further used by the receiver to sense the sensing target;
the receiving module is configured to receive at least one third reference signal;
the measuring module is configured to measure the at least one third reference signal to obtain the first information, where the third reference signal is sent by a transmitter; and
the second sending module is configured to send the first information.

According to an eighth aspect of the embodiments of the present disclosure, a communication device is provided, including:
one or more processors;
where the processor is configured to call computer instructions to cause the communication device to perform the wireless sensing method described in the first aspect, the second aspect, or the third aspect of the present disclosure.

According to a ninth aspect of the embodiment of the present disclosure, a communication system is provided, including a receiver, a transmitter, and a sensing target, where the receiver is configured to implement any wireless sensing method described in the first aspect of the present disclosure, the transmitter is configured to implement any wireless sensing method described in the second aspect of the present disclosure, and the sensing target is configured to implement any one of the wireless sensing methods described in the third aspect of the present disclosure.

According to a tenth aspect of the embodiments of the present disclosure, a storage medium is provided, and the storage medium stores instructions. The instructions, when executed on a communication device, cause the communication device to perform the wireless sensing method described in the first aspect, the second aspect, or the third aspect of the present disclosure.

### BRIEF DESCRIPTION OF THE DRAWINGS

To more clearly illustrate the technical solutions in the embodiments of the present disclosure, the accompanying drawings required for describing the embodiments are introduced below. The following accompanying drawings are merely some embodiments of the present disclosure and do not impose specific limitations on the protection scope of the present disclosure.
FIG. 1a is a schematic diagram of the architecture of a communication system shown according to an embodiment of the present disclosure.
FIG. 1b is a schematic diagram of wireless sensing of a communication system shown according to an embodiment of the present disclosure.
FIG. 1c is a schematic diagram of wireless sensing of a communication system shown according to an embodiment of the present disclosure.
FIG. 2 is a schematic interaction diagram of a wireless sensing method shown according to an embodiment of the present disclosure.
FIG. 3a is a schematic flow chart of a wireless sensing method shown according to an embodiment of the present disclosure.
FIG. 3b is a schematic flow chart of a wireless sensing method shown according to an embodiment of the present disclosure.
FIG. 3c is a schematic flow chart of a wireless sensing method shown according to an embodiment of the present disclosure.
FIG. 3d is a schematic flow chart of a wireless sensing method shown according to an embodiment of the present disclosure.
FIG. 4a is a schematic flow chart of a wireless sensing method shown according to an embodiment of the present disclosure.
FIG. 4b is a schematic flow chart of a wireless sensing method shown according to an embodiment of the present disclosure.
FIG. 5a is a schematic flow chart of a wireless sensing method shown according to an embodiment of the present disclosure.
FIG. 5b is a schematic flow chart of a wireless sensing method shown according to an embodiment of the present disclosure.
FIG. 6 is a schematic interaction diagram of a wireless sensing method shown according to an embodiment of the present disclosure.
FIG. 7 is a schematic flow chart of a wireless sensing method shown according to an embodiment of the present disclosure.
FIG. 8a is a schematic structural diagram of a second wireless sensing apparatus provided according to an embodiment of the present disclosure.
FIG. 8b is a schematic structural diagram of a second wireless sensing apparatus provided according to an embodiment of the present disclosure.
FIG. 8c is a schematic structural diagram of a third wireless sensing apparatus provided according to an embodiment of the present disclosure.
FIG. 8d is a schematic structural diagram of a third wireless sensing apparatus provided according to an embodiment of the present disclosure.
FIG. 9a is a schematic structural diagram of a communication device provided according to an embodiment of the present disclosure.
FIG. 9b is a schematic structural diagram of a chip provided according to an embodiment of the present disclosure.

### DETAILED DESCRIPTION

In wireless sensing, the accuracy of sensing needs to be further improved.

The embodiments of the present disclosure provide a wireless sensing method, an apparatus, and a storage medium.

In a first aspect, a wireless sensing method is provided, which is executed by a receiver. The method includes:
obtaining first information, where the first information is used to indicate a sensing channel state;
receiving a first reference signal sent by a transmitter; and
sensing a sensing target according to the first reference signal and the first information.

In the above embodiment, the receiver obtains the first information used to indicate the sensing channel state, and after receiving the first reference signal sent by the transmitter, senses the sensing target according to the first information and the first reference signal. This can effectively eliminate the clutter that affects sensing from the received signal of the first reference signal based on the sensing channel state, thereby effectively improving the accuracy of sensing the sensing target.

With reference to some embodiments of the first aspect, in some embodiments, obtaining the first information includes:
receiving a second reference signal, where the second reference signal is sent by the sensing target; and
measuring the second reference signal to obtain the first information.

In the above embodiments, by having the sensing target send the second reference signal and causing the receiver to measure the second reference signal, the first information used to indicate the sensing channel state can be accurately obtained, thereby ensuring the accuracy of sensing the sensing target.

With reference to some embodiments of the first aspect, in some embodiments, the second reference signal is a sounding reference signal (SRS).

In the above embodiments, the receiver receives the sounding reference signal sent by the sensing target, and can measure the SRS to obtain a more accurate sensing channel state, thereby more accurately sensing the sensing target.

With reference to some embodiments of the first aspect, in some embodiments, obtaining the first information includes:
receiving the first information sent by the sensing target, where the first information is obtained by the sensing target through measuring at least one third reference signal, and the third reference signal is sent by the transmitter.

In the above embodiment, the sensing target measures the third reference signal sent by the transmitter to obtain the first information, which enables the sensing target to directly send the measured first information to the receiver, so that more accurate first information can be obtained, thereby ensuring the reliability of sensing the sensing target. Furthermore, the transmitter can further improve the accuracy of the first information by sending multiple third reference signals.

With reference to some embodiments of the first aspect, in some embodiments, a parameter of each of the at least one third reference signal is different, and the parameter includes at least one of the following: a bandwidth, a frequency-domain density, a time-domain spanning, and a time-domain density.

In the above embodiments, by sending different third reference signals, the transmitter can avoid the problem that the sensing target cannot reliably receive the third reference signals, which would otherwise lead to low accuracy of the first information. Additionally, this enables the sensing target to measure the third reference signals under different parameters, thereby further improving the reliability of the first information.

With reference to some embodiments of the first aspect, in some embodiments, the third reference signal has at least one of the following characteristics compared with the first reference signal:
a lower resource overhead, a narrower bandwidth, a lower frequency-domain density, a shorter time-domain spanning, a lower time-domain density, and fewer transmit antenna ports.

In the above implementation, the resource overhead occupied by the third reference signal may be made smaller than that of the first reference signal. This can effectively reduce the resources occupied by the transmitter when sending the third reference signal, enabling the communication system to reduce resource occupation while ensuring sensing accuracy.

With reference to some embodiments of the first aspect, in some embodiments, the first information includes at least one of the following:
a delay spectrum estimation, an angle spectrum estimation, a Doppler spectrum estimation and an eigen-spectrum estimation.

In the above embodiments, by measuring the second reference signal or the third reference signal to obtain at least one of the aforementioned spectrum estimations, the delay, angle, Doppler frequency value, and eigenvector of the second reference signal or the third reference signal can be accurately analyzed. This in turn enables the first information to accurately indicate the sensing channel state.

With reference to some embodiments of the first aspect, in some embodiments, the first information includes at least one of the following:
first N₁ delay components with highest power in the delay spectrum estimation;
first N₂ angle components with highest power in the angle spectrum estimation;
first N₃ Doppler components with highest power in the Doppler spectrum estimation;
first N₄ delay components with largest multiple signal classification (MUSIC) spectrum metric values in the delay spectrum estimation;
first N₅ angle components with largest MUSIC spectrum metric values in the angle spectrum estimation;
first N₆ Doppler components with largest MUSIC spectrum metric values in the Doppler spectrum estimation; and
eigenvectors corresponding to first N₇ largest eigenvalues in the eigen-spectrum estimation;
where values of N₁, N₂, N₃, N₄, N₅, N₆, and N₇ are greater than or equal to 1.

In the above embodiments, by setting such a second range, the first information can include only the main part or the part with the highest power of the aforementioned multiple spectrum estimations. This not only reduces resource occupancy but also enables the first information to reliably indicate the sensing channel state.

With reference to some embodiments of the first aspect, in some embodiments, the value of at least one of N₁, N₂, N₃, N₄, N₅, N₆, and N₇ is 1.

In the above embodiments, only the most important component in each spectrum estimation may be retained, which can reduce resource occupation to the greatest extent while enabling the first information to reliably indicate the sensing channel state.

With reference to some embodiments of the first aspect, in some embodiments, sensing the sensing target according to the first reference signal and the first information includes:
measuring the first reference signal according to a first range, where the first range is determined according to the first information.

In the above embodiments, the first range can be determined based on the first information, and the first reference signal can be measured based on this first range. This can effectively narrow down the range of measurement based on the first reference signal, eliminating the need to measure each component. It not only reduces the resource occupation of the reference signal but also effectively lowers the computational complexity of the sensing receiver.

With reference to some embodiments of the first aspect, in some embodiments, obtaining the first information includes:
obtaining the first information in a first time unit;
where sensing the sensing target according to the first reference signal and the first information includes:
sensing the sensing target according to the first reference signal and the first information in a second time unit;
where the first time unit and the second time unit are respectively any one of the following: an OFDM symbol, a time slot, a subframe, and a frame.

In the above embodiments, these two steps may be performed in different time units, so that the receiver can independently obtain the first information and perform sensing on the sensing target.

With reference to some embodiments of the first aspect, in some embodiments, sensing the sensing target according to the first reference signal and the first information includes:
determining a first autocovariance according to the first information, where the first autocovariance is an autocovariance of a channel associated with the sensing target;
determining a second autocovariance according to the first reference signal, where the second autocovariance is an autocovariance of a channel including all direct waves and all scattered waves;
determining a third autocovariance according to the first autocovariance and the second autocovariance, where the third autocovariance is an autocovariance of a Type-2 clutter channel; and
sensing the sensing target according to the second autocovariance and the third autocovariance.

In the above embodiments, the autocovariance of the channel associated with the sensing target can be obtained based on the first information, the autocovariance of the channel including all direct waves and all scattered waves can also be obtained based on the first reference signal, and then the autocovariance of the Type-2 clutter channel can be obtained. In this way, the receiver can exclude the autocovariance of the Type-2 clutter channel from the autocovariance of the channel including all direct waves and all scattered waves. This further enables the receiver to eliminate the impact of the Type-2 clutter channel on sensing when sensing the sensing target, thereby effectively ensuring the accuracy of sensing.

With reference to some embodiments of the first aspect, in some embodiments, sensing the sensing target according to the second autocovariance and the third autocovariance includes:
subtracting the third autocovariance from the second autocovariance to obtain a first calculation result; and
determining an orthogonal basis of a noise subspace according to the first calculation result and performing spectrum estimation to obtain a spectrum estimation result for indicating second information of the sensing target.

In the above embodiments, the receiver may subtract the third autocovariance from the second autocovariance in advance, so as to reliably obtain the first calculation result that does not include the Type-2 clutter channel, and then can accurately obtain the spectrum estimation result based on the first calculation result, that is, a more accurate sensing result of the sensing target.

With reference to some embodiments of the first aspect, in some embodiments, sensing the sensing target according to the second autocovariance and the third autocovariance includes:
projecting the second autocovariance onto a null space of the third autocovariance to obtain a second calculation result; and
determining an orthogonal basis of a noise subspace according to the second calculation result and performing spectrum estimation to obtain a spectrum estimation result for indicating second information of the sensing target.

In the above embodiments, the receiver may first project the second autocovariance onto the null space of the third autocovariance, and can reliably obtain the second calculation result that does not include the Type-2 clutter channel, and then can accurately obtain the spectrum estimation result based on the second calculation result, that is, a more accurate sensing result of the sensing target.

In a second aspect, a wireless sensing method is provided, which is performed by a transmitter, and the method includes:
sending a first reference signal, where the first reference signal is used by a receiver to sense a sensing target according to the first reference signal and first information, where the first information is used to indicate a sensing channel state.

With reference to some embodiments of the second aspect, in some embodiments, the first information is obtained by the receiver through measuring a second reference signal sent by the sensing target.

With reference to some embodiments of the second aspect, in some embodiments, the second reference signal is a sounding reference signal (SRS).

With reference to some embodiments of the second aspect, in some embodiments, the first information is obtained and sent by the sensing target through measuring at least one third reference signal, and the third reference signal is sent by the transmitter.

With reference to some embodiments of the second aspect, in some embodiments, a transmission parameter of each of the at least one third reference signal is different, and the transmission parameter includes at least one of the following: a bandwidth, a frequency-domain density, a time-domain span, and a time-domain density.

With reference to some embodiments of the second aspect, in some embodiments, the third reference signal has at least one of the following characteristics compared with the third reference signal:
a lower resource overhead, a narrower bandwidth, a lower frequency-domain density, a shorter time-domain spanning, a lower time-domain density, and fewer transmit antenna ports.

With reference to some embodiments of the second aspect, in some embodiments, the first information includes at least one of the following:
a delay spectrum estimation, an angle spectrum estimation, a Doppler spectrum estimation and an eigen-spectrum estimation.

With reference to some embodiments of the second aspect, in some embodiments, the first information includes at least one of the following:
first N₁ delay components with highest power in the delay spectrum estimation;
first N₂ angle components with highest power in the angle spectrum estimation;
first N₃ Doppler components with highest power in the Doppler spectrum estimation;
first N₄ delay components with largest multiple signal classification (MUSIC) spectrum metric values in the delay spectrum estimation;
first N₅ angle components with largest MUSIC spectrum metric values in the angle spectrum estimation;
first N₆ Doppler components with largest MUSIC spectrum metric values in the Doppler spectrum estimation; and
eigenvectors corresponding to first N₇ largest eigenvalues in the eigen-spectrum estimation;
where values of N₁, N₂, N₃, N₄, N₅, N₆ and N₇ are greater than or equal to 1.

With reference to some embodiments of the second aspect, in some embodiments, the value of at least one of N₁, N₂, N₃, N₄, N₅, N₆ and N₇ is 1.

In a third aspect, a wireless sensing method is provided, which is performed by a sensing target, and the method includes:
sending a second reference signal, where the second reference signal is used by a receiver to measure the second reference signal to obtain first information, where the first information is used to indicate a sensing channel state, and the first information is further used by the receiver to sense the sensing target.

In a fourth aspect, a wireless sensing method is provided, which is performed by a sensing target, and the method includes:
receiving at least one third reference signal,
measuring the at least one third reference signal to obtain the first information, where the third reference signal is sent by a transmitter; and
sending the first information.

In a fifth aspect, a wireless sensing method is provided, which is applied to a communication system, and the communication system includes a receiver, a transmitter, and a sensing target. The method includes:
obtaining, by the receiver, first information, where the first information is used to indicate a sensing channel state;
sending, by the transmitter, a first reference signal; and
sensing, by the receiver, the sensing target according to the first reference signal and the first information.

In a sixth aspect, a first wireless sensing apparatus is provided, including:
an obtaining module, configured to obtain first information, where the first information is used to indicate a sensing channel state;
a receiving module, configured to receive a first reference signal sent by a transmitter; and
a sensing module, configured to sense a sensing target according to the first reference signal and the first information.

In a seventh aspect, a second wireless sensing apparatus is provided, including:
a sending module, configured to send a first reference signal, where the first reference signal is used by a receiver to sense a sensing target according to the first reference signal and first information, where the first information is used to indicate a sensing channel state.

In an eighth aspect, a third wireless sensing apparatus is provided, including:
a sending module, configured to send a second reference signal, where the second reference signal is used by a receiver to measure the second reference signal to obtain first information, where the first information is used to indicate a sensing channel state, and the first information is further used by the receiver to sense the sensing target.

In a ninth aspect, an embodiment of the present disclosure provides a communication device, including:
one or more processors;
where the processor is configured to call computer instructions to cause the communication device to perform the wireless sensing method described in the first aspect, the second aspect, the third aspect or the fourth aspect.

In a tenth aspect, an embodiment of the present disclosure provides a storage medium, where the storage medium stores instructions. The instructions, when executed on the communication device, cause the communication device to perform the method described in the optional implementations of the first, second, third and fourth aspects.

In an eleventh aspect, an embodiment of the present disclosure provides a program product. The program product, when executed by a communication device, causes the communication device to perform the method described in the optional implementations of the first, second, third and fourth aspects.

In a twelfth aspect, an embodiment of the present disclosure proposes a computer program, which, when executed on a computer, causes the computer to perform the method described in the optional implementations of the first, second, third and fourth aspects.

In a thirteenth aspect, an embodiment of the present disclosure provides a communication system, including: a receiver, a transmitter and a sensing target; where the receiver is configured to perform the method described in the optional implementations of the first aspect, the transmitter is configured to perform the method described in the optional implementations of the second aspect, and the sensing target is configured to perform the method described in the optional implementations of the third aspect or the fourth aspect.

It is understandable that the aforementioned first wireless sensing apparatus, second wireless sensing apparatus, third wireless sensing apparatus, communication device, communication system, storage medium, and computer program product are all configured to execute the methods provided in the embodiments of the present disclosure. Therefore, for the beneficial effects they can achieve, reference may be made to the beneficial effects in the corresponding methods, which will not be repeated herein.

The embodiments of the present disclosure provide wireless sensing methods, apparatuses, and a storage medium. In some embodiments, terms such as the information processing method, the wireless sensing method, and the communication method may be replaced with each other; terms such as the wireless sensing apparatus and the communication apparatus may be replaced with each other; and terms such as the communication system, the wireless sensing system, and the communication system may be replaced with each other.

The embodiments of the present disclosure are not exhaustive and are merely illustrative of some embodiments, and are not intended to impose specific limitations on the protection scope of the present disclosure. In the absence of contradiction, each step in a certain embodiment may be implemented as an independent embodiment, and the steps may be arbitrarily combined. For example, a solution with some steps removed from a certain embodiment may also be implemented as an independent embodiment, and the order of the steps in a certain embodiment may be arbitrarily exchanged. In addition, the optional implementation manners in a certain embodiment may be arbitrarily combined. In addition, the various embodiments may be arbitrarily combined. For example, some or all steps of different embodiments may be arbitrarily combined, and a certain embodiment may be arbitrarily combined with the optional implementation manners of other embodiments.

The embodiments of the present disclosure are not exhaustive and are merely illustrative of some embodiments, and are not intended to impose specific limitations on the protection scope of the present disclosure. In the absence of contradiction, each step in a certain embodiment may be implemented as an independent embodiment, and the steps may be arbitrarily combined. For example, a solution with some steps removed from a certain embodiment may also be implemented as an independent embodiment, and the order of the steps in a certain embodiment may be arbitrarily exchanged. In addition, the optional implementation manners in a certain embodiment may be arbitrarily combined. In addition, the various embodiments may be arbitrarily combined. For example, some or all steps of different embodiments may be arbitrarily combined, and a certain embodiment may be arbitrarily combined with the optional implementation manners of other embodiments.

In each embodiment of the present disclosure, unless otherwise specified or existing logical contradictions, the terms and/or descriptions between the various embodiments are consistent and can be referred to each other. The technical features in different embodiments can be combined to form new embodiments according to their inherent logical relationships.

The terms used in the embodiments of the present disclosure are only for the purpose of describing specific embodiments and are not intended to limit the present disclosure.

In the embodiments of the present disclosure, unless otherwise specified, elements expressed in the singular form, such as "a", "an", "the", "the above-mentioned", "said", "the aforesaid", "this", etc, may mean "one and only one", and may also mean "one or more", "at least one", etc. For example, when articles such as "a", "an" and "the" in English are used in translation, the noun following the article may be understood as a singular expression or a plural expression.

In the embodiments of the present disclosure, "plurality" refers to two or more.

In some embodiments, terms such as "at least one of", "one or more", "a plurality of", and "multiple" may be replaced with one another. In some embodiments, expressions like "at least one of A and B", "A and/or B", "A in one case and B in another case", and "in response to case A and in response to another case B" may include the following technical solutions depending on the situation: in some embodiments, A (executing A independently of B); in some embodiments, B (executing B independently of A); in some embodiments, execution is selected from A and B (A and B are optionally executed); in some embodiments, A and B (both A and B are executed). The same applies when there are more alternatives, such as A, B, and C.

In some embodiments, expressions such as "A or B" may include the following technical solutions depending on the situation: in some embodiments, A (executing A independently of B); in some embodiments, B (executing B independently of A); in some embodiments, execution is selected from A and B (A and B are optionally executed). The same applies when there are more alternatives, such as A, B, and C.

In the embodiments of the present disclosure, prefixes such as "first" and "second" are only used to distinguish different described objects, and do not constitute any restriction on the position, order, priority, quantity, content, or other aspects of the described objects. For statements about the described objects, reference shall be made to the descriptions in the context of the claims or the embodiments, and no redundant limitation shall be constituted due to the use of these prefixes. For example, if the described object is a "field", the ordinal numbers before "field" in "first field" and "second field" do not limit the position or order between the "fields"; "first" and "second" do not restrict whether the "fields" they modify are in the same message, nor do they limit the sequence order between the "first field" and the "second field". For another example, if the described object is a "level", the ordinal numbers before the "level" in "first level" and "second level" do not limit the priority between the "levels". For yet another example, the quantity of the described object is not limited by the ordinal number, and may be one or more. Taking the "first apparatus" as an example, the quantity of the "apparatus" therein may be one or more. In addition, objects modified by different prefixes may be the same or different. For instance, if the described object is an "apparatus", the "first apparatus" and the "second apparatus" may be the same apparatus or different apparatuses, and their types may be the same or different; for another example: if the described object is "information", the "first information" and the "second information" may be the same information or different information, and their contents may be the same or different.

In some embodiments, expressions such as "including A", "containing A", "used to indicate A", and "carrying A" can be interpreted as directly carrying A, and can also be interpreted as indirectly indicating A.

In some embodiments, terms such as "in response to...", "in response to determining...", "in the case of...", "when...", "in the case that...", "if...", and "in the event that..." may be replaced with one another.

In some embodiments, terms such as "greater than", "greater than or equal to", "not less than", "more than", "more than or equal to", "no less than", "higher than", "higher than or equal to", "not lower than", and "above" may be replaced with one another; terms such as "less than", "less than or equal to", "not greater than", "fewer than", "fewer than or equal to", "no more than", "lower than", "lower than or equal to", "not higher than", and "below" may be replaced with one another.

In some embodiments, terms such as "apparatus" may be interpreted as either physical or virtual entities, and their names are not limited to those recorded in the embodiments. Terms including "apparatus", "equipment", "device", "circuit", "network element", "node", "function", "unit", "section", "system", "network", "chip", "chip system", "entity", and "subject" may be replaced with one another.

In some embodiments, terms such as "access network device (AN device)", "radio access network device (RAN device)", "base station (BS)", "radio base station", "fixed station", "node", "access point", "transmission point (TP)", "reception point (RP)", "transmission/reception point (TRP)", "panel", "antenna panel", "antenna array", "cell", "macro cell", "small cell", "femto cell", "pico cell", "sector", "cell group", "carrier", "component carrier", and "bandwidth part (BWP)" may be replaced with one another.

In some embodiments, terms such as "terminal", "terminal device", "user equipment (UE)", "user terminal", "mobile station (MS)", "mobile terminal (MT)", "subscriber station", "mobile unit", "subscriber unit", "wireless unit", "remote unit", "mobile device", "wireless device", "wireless communication device", "remote device", "mobile subscriber station", "access terminal", "mobile terminal", "wireless terminal", "remote terminal", "handset", "user agent", "mobile client", and "client" may be replaced with one another.

In some embodiments, an access network device, a core network device, or a network device may be replaced with a terminal. For example, the various embodiments of the present disclosure may also be applied to a structure in which the communication between an access network device, a core network device, or a network device and a terminal is replaced with communication between multiple terminals (for example, this may also be referred to as device-to-device (D2D), vehicle-to-everything (V2X), etc.). In this case, a structure in which the terminal has all or part of the functions of the access network device may also be adopted. In addition, terms such as "uplink" and "downlink" may also be replaced with terms corresponding to inter-terminal communication (for example, "side"). For example, the uplink channel, the downlink channel, etc., may be replaced with a side channel, and the uplink, the downlink, etc., may be replaced with a sidelink.

In some embodiments, a terminal may be replaced with an access network device, a core network device, or a network device. In this case, a structure may also be adopted in which the access network device, the core network device, or the network device has all or part of the functions of a terminal.

In some embodiments, the names of information, etc are not limited to those recorded in the embodiments. Terms such as "information", "message", "signal", "signaling", "report", "configuration", "indication", "instruction", "command", "channel", "parameter", "domain", "field", "symbol", "symbol", "codebook", "codeword", "codepoint", "bit", "data", "program", and "chip" may be replaced with one another.

In some embodiments, terms such as "codebook", "codeword", and "precoding matrix" may be replaced with one another. For example, a codebook may be a collection of one or more codewords/precoding matrices.

In some embodiments, terms such as "up", "uplink", and "physical uplink" may be replaced with one another; terms such as "down", "downlink", and "physical downlink" may be replaced with one another; and terms such as "side", "sidelink", "side communication", "sidelink communication", "direct connection", "direct link", "direct communication", and "direct link communication" may be replaced with one another.

In some embodiments, terms such as "downlink control information (DCI)", "downlink (DL) assignment", "DL DCI", "uplink (UL) grant", and "UL DCI" may be replaced with one another.

In some embodiments, terms such as "physical downlink shared channel (PDSCH)" and "DL data" may be replaced with one another; terms such as "physical uplink shared channel (PUSCH)" and "UL data" may be replaced with one another.

In some embodiments, terms such as "radio", "wireless", "radio access network (RAN)", "access network (AN)", and "RAN-based" may be replaced with one another.

In some embodiments, terms such as "search space", "search space set", "search space configuration", "search space set configuration", "control resource set (CORESET)", and "CORESET configuration" may be replaced with one another.

In some embodiments, terms such as "synchronization signal (SS)", "synchronization signal block (SSB)", "reference signal (RS)", "pilot", and "pilot signal" may be replaced with one another.

In some embodiments, terms such as "moment", "point in time", "time", and "time position" may be replaced with one another; terms such as "duration", "time period", "time window", "window", and "time" may be replaced with one another.

In some embodiments, terms such as "component carrier (CC)", "cell", "frequency carrier", and "carrier frequency" may be replaced with one another.

In some embodiments, terms such as "resource block (RB)", "physical resource block (PRB)", "sub-carrier group (SCG)", "resource element group (REG)", "PRB pair", "RB pair", and "resource element (RE)" may be replaced with one another.

In some embodiments, terms such as "wireless access scheme" and "waveform" may be replaced with one another.

In some embodiments, terms such as "precoding", "precoder", "weight", "precoding weight", "quasi-co-location (QCL)", "transmission configuration indication (TCI) state", "spatial relation", "spatial domain filter", "transmission power", "phase rotation", "antenna port", "antenna port group", "layer", "the number of layers", "rank", "resource", "resource set", "resource group", "beam", "beam width", "beam angular degree", "antenna", "antenna element", and "panel" may be replaced with one another.

In some embodiments, terms such as "frame", "radio frame", "subframe", "slot", "sub-slot", "mini-slot", "symbol", "code element (symbol)", and "transmission time interval (TTI)" may be replaced with one another.

In some embodiments, terms such as "obtain", "acquire", "get", "receive", "transmit", "bidirectional transmission", and "transmit and/or receive" may be replaced with one another. These terms can be interpreted as having multiple meanings, including receiving from other entities, acquiring from protocols, obtaining through self-processing, and autonomous implementation, etc.

In some embodiments, terms such as "send", "transmit", "report", "deliver", "transmission", "bidirectional transmission", and "send and/or receive" may be replaced with one another.

In some embodiments, terms such as "certain", "preseted", "preset", "set", "indicated", "a certain", "any", and "first" may be replaced with one another. Phrases like "a certain A", "a preseted A", "a preset A", "a set A", "an indicated A", "a certain A", "any A", and "a first A" can be interpreted as A pre-specified in a protocol, etc., or as A obtained through setting, configuration, indication, etc., or as a specific A, a certain A, any A, or a first A, etc., but are not limited thereto.

In some embodiments, the term "determining" may be interpreted as judgement, deciding, judging, calculating, computing, processing, deriving, investigating, searching, looking up, search, inquiry, ascertaining, receiving, transmitting, input, output, accessing, resolving, selecting, choosing, establishing, comparing, "assuming ", "expecting", "considering", broadcasting, notifying, communicating, forwarding, configuring, reconfiguring, allocating, mapping, assigning, etc., but is not limited thereto.

In some embodiments, a determination or judgment may be made using a value represented by 1 bit (0 or 1), or by a true or false value (boolean value) represented by true or false, or by a comparison of numerical values (e.g., comparison with a predetermined value), but is not limited thereto.

In some embodiments, "network" may be interpreted as the devices included in the network (e.g., access network device, core network device, etc.).

In some embodiments, "not expecting to receive" may be interpreted as not receiving on time-domain resources and/or frequency-domain resources, or may be interpreted as
not performing subsequent processing on the data, etc. after receiving the data, etc.; "not expecting to send" may be interpreted as not sending, or as sending but not expecting the recipient to respond to the sent content.

In some embodiments, obtaining data, information, etc., may comply with the laws and regulations of the country where it is obtained.

In some embodiments, data, information, etc., may be obtained after acquiring the user's consent.

In addition, each element, each row, or each column in the tables of the embodiments of the present disclosure may be implemented as an independent embodiment, and any combination of any element, any row, or any column may also be implemented as an independent embodiment.

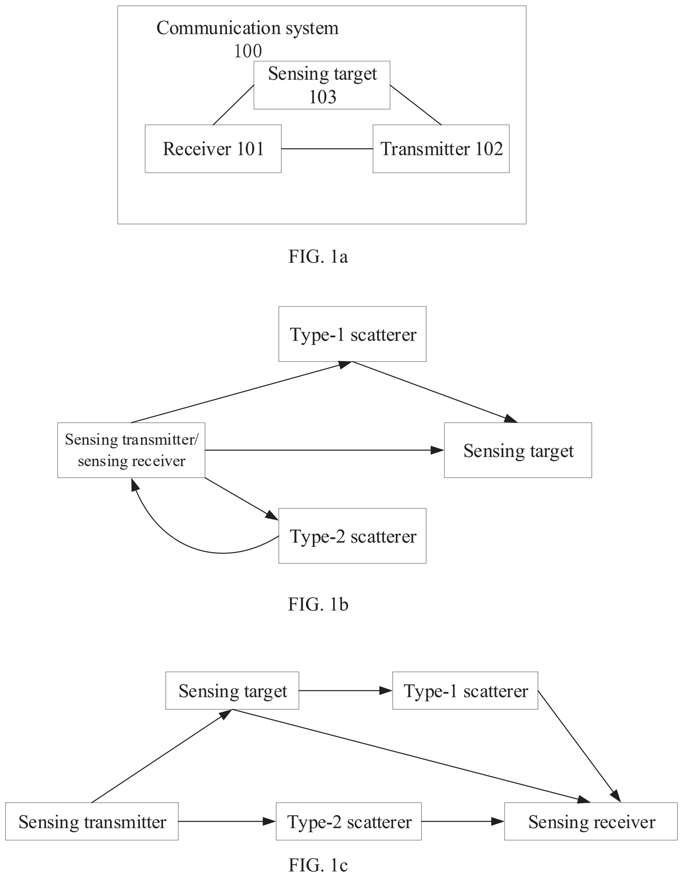

FIG. 1a is a schematic diagram of the architecture of a communication system shown according to an embodiment of the present disclosure. As shown in FIG. 1a, the communication system 100 includes a receiver 101, a transmitter 102, and a sensing target 103. In some embodiments, the sensing target 102 may be a terminal or a network device. In some embodiments, the receiver 101 and the transmitter 102 may serve as different terminals or different network devices respectively; alternatively, the receiver 101 and the transmitter 102 may be the same communication device. For example, the receiver 101 and the transmitter 102 may be respectively deployed in a terminal and a network device, or respectively in two different terminals, or respectively in two different network devices; alternatively, the receiver 101 and the transmitter 102 may be deployed in the same terminal or in the same network device, which is not limited by the embodiments of the present disclosure.

In some embodiments, the receiver 101 and the transmitter 102 may be used for wireless sensing. The receiver 101 may also be referred to as a sensing receiver, and the transmitter 102 may also be referred to as a sensing transmitter.

In some embodiments, the network device may include at least one of an access network (RAN) device and a core network device.

In some embodiments, the communication system 100 is, for example, a long term evolution (LTE) system, a 5th generation (5G) mobile communication system, a 5G new radio (NR) system, or other future communication systems, but is not limited thereto.

In some embodiments, the terminal includes, for example, at least one of a mobile phone, a wearable device, an Internet of Things (IoT) device, a vehicle with communication functionality, an intelligent vehicle, a tablet computer (Pad), a computer with wireless transceiving functionality, a virtual reality (VR) terminal device, an augmented reality (AR) terminal device, a wireless terminal device in industrial control, a wireless terminal device in self-driving, a wireless terminal device in remote medical surgery, a wireless terminal device in a smart grid, a wireless terminal device in transportation safety, a wireless terminal device in a smart city, and a wireless terminal device in a smart home, but is not limited thereto.

In some embodiments, an access network device is, for example, a node or device that accesses a terminal to a wireless network. The access network device may include at least one of an evolved NodeB (eNB) in a 5G communication system, a next generation eNB (ng-eNB), a next generation NodeB (gNB), a node B (NB), a home node B (HNB), a home evolved node B (HeNB), a wireless backhaul device, a radio network controller (RNC), a base station controller (BSC), a base transceiver station (BTS), a base band unit (BBU), a mobile switching center, a base station in a 6G communication system, an open radio access network (Open RAN), a cloud radio access network (Cloud RAN), a base station in other communication systems, and an access node in a wireless fidelity (WiFi) system, but is not limited thereto.

In some embodiments, the technical solutions of the present disclosure may be applied to the Open RAN architecture. In this case, the interfaces between access network devices or within an access network device involved in the embodiments of the present disclosure may become internal interfaces of the Open RAN, and the processes and information exchange between these internal interfaces can be implemented through software or programs.

In some embodiments, an access network device may be composed of a central unit (CU) and distributed units (DUs). The CU may also be referred to as a control unit. The adoption of the CU-DU structure may split the protocol layers of the access network device, with functions of some protocol layers being placed in the CU for centralized control, and the functions of the remaining part or all of the protocol layers being distributed in the DUs, which are centrally controlled by the CU, but is not limited thereto.

In some embodiments, a core network device may be a single device that includes one or more network elements, or may be multiple devices or device groups that respectively include all or part of one or more of the aforementioned network elements. The network element may be virtual or physical. The core network includes, for example, at least one of an Evolved Packet Core (EPC), a 5G Core Network (5GCN), and a Next Generation Core (NGC).

It can be understood that the communication system described in the embodiments of the present disclosure is intended to more clearly illustrate the technical solutions of the embodiments of the present disclosure, and does not constitute a limitation on the technical solutions provided by the embodiments of the present disclosure. One of ordinary skills in the art can know that, with the evolution of system architectures and the emergence of new service scenarios, the technical solutions provided by the embodiments of the present disclosure are also applicable to similar technical problems.

The following embodiments of the present disclosure may be applied to the communication system 100 shown in FIG. 1a, or some entities thereof, but are not limited thereto. The various entities shown in FIG. 1a are illustrative only. The communication system may include all or part of the entities in FIG. 1a, and may also include other entities not shown in FIG. 1a. The numbers and forms of various entities are arbitrary. The connection relationships between the entities are illustrative only. The entities may be unconnected or connected, and the connection may be in any manner, which may be a direct connection or an indirect connection, a wired connection or a wireless connection.

Various embodiments of the present disclosure may be applied to Long Term Evolution (LTE), LTE-Advanced (LTE-A), LTE-Beyond (LTE-B), SUPER 3G, IMT-Advanced, the 4th generation mobile communication system (4G), the 5th generation mobile communication system (5G), 5G New Radio (NR), Future Radio Access (FRA), New-Radio Access Technology (New-RAT), New Radio (NR), New Radio Access (NX), Future Generation Radio Access (FX), Global System for Mobile Communications (GSM (registered trademark)), CDMA2000, Ultra Mobile Broadband (UMB), IEEE 802.11 (Wi-Fi (registered trademark)), IEEE 802.16 (WiMAX (registered trademark)), IEEE 802.20, Ultra-Wide Band (UWB), Bluetooth (registered trademark), Public Land Mobile Network (PLMN), Device-to-Device (D2D) systems, Machine-to-Machine (M2M) systems, Internet of Things (IoT) systems, Vehicle-to-Everything (V2X), systems using other communication methods, next-generation systems extended based on these, etc. In addition, multiple systems (for example, a combination of LTE or LTE-A and 5G, etc.) may also be combined for application.

In some embodiments, wireless communication technology and wireless sensing technology are highly similar. Since integrated communication and sensing can combine wireless communication and wireless sensing, and introduce close collaboration between the two, it can improve spectrum efficiency and reduce network deployment costs.

In some embodiments, wireless sensing requires estimating the distance, angles of arrival (such as horizontal angle and vertical angle), and speed of a sensing target. Optionally, sensing also includes wireless tracking and radio frequency identification of the sensing target.

In some embodiments, for high-precision sensing, a sensing transmitter may send a dedicated reference signal. This reference signal may be referred to as a sensing reference signal. In the bistatic mode, the sensing receiver measures the sensing reference signal to estimate the distance, angle, and/or speed of the sensing target. In the monostatic mode, the sensing transmitter estimates the distance, angle, and/or speed of the sensing target by measuring the echo of the sensing reference signal.

FIG. 1b and FIG. 1c are respectively schematic diagrams of wireless sensing of communication systems according to embodiments of the present disclosure. Referring to FIG. 1b, in the monostatic mode, the sensing transmitter and the sensing receiver are co-located; for example, the sensing transmitter and the sensing receiver are deployed in the same device. Referring to FIG. 1c, in the bistatic mode, the sensing receiver and the sensing transmitter are not co-located; for example, the sensing transmitter and the sensing receiver are deployed in different devices, or in different positions of the same device.

In some embodiments, there may be some non-target scatterers in the surrounding environment of the sensing transmitter, sensing receiver, and sensing target. These scatterers may include scatterers or reflectors in the narrow sense. Such scatterers may also scatter the sensing reference signals from the sensing transmitter, and the scattered signals may reach the sensing receiver. Obviously, the scattering by such non-sensing-target scatterers is harmful and not conducive to the detection of the sensing target. Such scattered waves may be referred to as clutter. For high-precision sensing systems, effective clutter elimination methods are crucial.

As shown in FIG. 1b and FIG. 1c, the scatterers around the sensing transmitter, sensing receiver, and sensing target may be divided into the following two categories:
Type-1 scatterers: The sensing reference signals sent by the sensing transmitter can reach the sensing target after being scattered. Optionally, the scattered clutter may be referred to as Type-1 clutter.
Type-2 scatterers: The sensing reference signals sent by the sensing transmitter cannot reach the sensing target after being scattered. Optionally, the scattered clutter may be referred to as Type-2 clutter.

In the above embodiments, regardless of the type of scatterer mentioned above, all will generate clutter and reduce the accuracy and performance of sensing to varying degrees. However, the impacts of the two types of clutter are not the same. Compared with the direct path (line-of-sight path) corresponding to the sensing target, the clutter generated by Type-1 scatterers has a longer propagation path and greater loss. Therefore, the power of this type of clutter is relatively low, and it is not the bottleneck of sensing performance. In contrast, Type-2 scatterers may be close to the sensing target, the sensing transmitter, or the sensing receiver. When a Type-2 scatterer is close to the sensing target, the power of its scattered waves is comparable to that of the direct waves reflected by the sensing target, which is detrimental to sensing performance. The worst-case scenario occurs in the monostatic mode when a Type-2 scatterer is located near the sensing transmitter, the power of the scattered wave may be significantly higher than that of the direct-path echo reflected by the sensing target due to the short propagation path. In this case, both sensing performance and accuracy will decrease significantly. In conclusion, the bottleneck of sensing performance lies in the clutter scattered by Type-2 scatterers, rather than the clutter scattered by Type-1 scatterers.

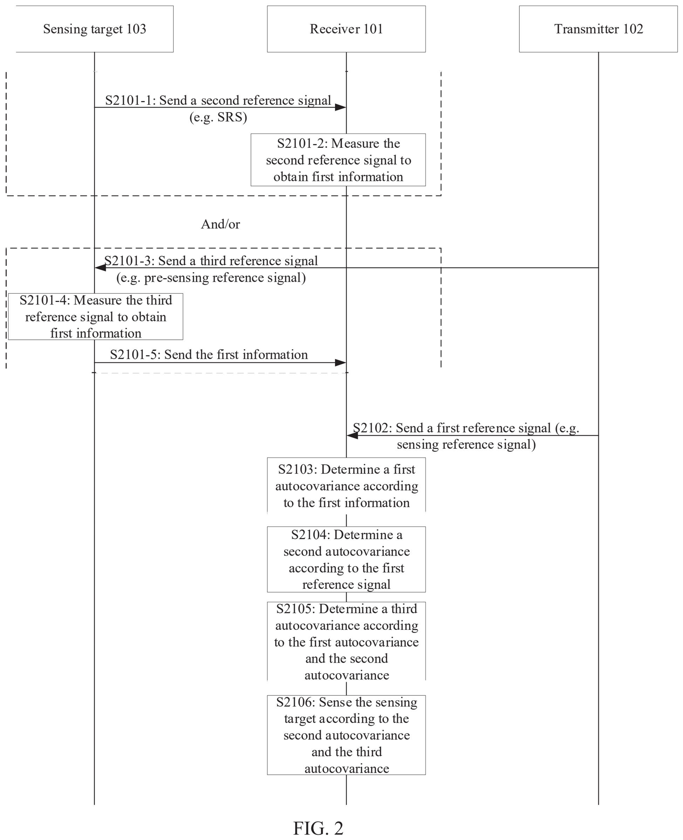

FIG. 2 is a schematic interaction diagram of a wireless sensing method shown according to an embodiment of the present disclosure. As shown in FIG. 2, the embodiment of the present disclosure relates to information processing and is applied to a communication system 100. The method includes the following.

**In step S2101-1,** the sensing target 103 sends a second reference signal.

**In** some embodiments, the receiver 101 receives the second reference signal. Optionally, the second reference signal may be a detective reference signal, for example, a sounding reference signal (SRS). Optionally, the second reference signal may be used by receiver 101 to measure the second reference signal. The present disclosure does not limit the name of the second reference signal.

Optionally, the sensing target 103 may periodically send the second reference signal. Optionally, the sensing target 103 may send the second reference signal in the direction towards the receiver 101, or the sensing target 103 may send the second reference signal in all directions.

**In step S2101-2,** the receiver 101 measures the second reference signal to obtain first information.

**In** some embodiments, the first information may be sent by the sensing target 103. In some embodiments, the measurement performed by the receiver 101 on the second reference signal may include, for example, measuring the direction, delay, and/or Doppler frequency of the second reference signal. In some embodiments, the measurement performed by the receiver 101 on the second reference signal may include, for example, performing spectrum estimation on the second reference signal, such as MUSIC spectrum estimation.

**In step S2101-3,** the transmitter 102 sends a third reference signal.

Optionally, the transmitter 102 may send a third reference signal to the sensing target 103; alternatively, the transmitter 102 may send the third reference signal to the surrounding area. Optionally, the third reference signal may be, for example, a pre-sensing reference signal. Optionally, the third reference signal may be used to instruct the sensing target 103 to measure the third reference signal.

**In** some embodiments, the sensing target 103 may receive at least one third reference signal. Optionally, the transmitter 102 may send at least one third reference signal. Optionally, the transmitter 102 may send the third reference signal multiple times. Optionally, the transmitter 102 may send the third reference signal periodically.

Optionally, the parameters of various third reference signals among the at least one third reference signal may all be different. Optionally, the parameters of some third reference signals among the at least one third reference signal may be the same, while the parameters of the other part of the third reference signals may be different.

Optionally, the parameter of the third reference signal may include at least one of the following: a bandwidth, a frequency-domain density, a time-domain spanning, and a time-domain density.

Optionally, "time-domain spanning" and "time-domain distribution" may be replaced with each other.

Optionally, some parameters of each third reference signal in the at least one third reference signal may be the same, or some parameters may be different. For example, among multiple third reference signals sent multiple times, the bandwidth may increase gradually, while the frequency-domain density, time-domain spanning, and time-domain density of the multiple third reference signals therein are all the same; alternatively, among multiple third reference signals sent multiple times, the bandwidth may decrease gradually and the frequency-domain density may increase gradually, while the time-domain spanning and time-domain density therein are all the same; alternatively, among the third reference signals sent multiple times, the bandwidth may increase gradually, and/or the frequency-domain density may increase gradually, and/or the time-domain spanning may increase gradually, and/or the time-domain density may increase gradually, and so on.

Optionally, the sensing target 103 may measure the third reference signal sent by the transmitter 102 to determine the first information, and send the first information to the receiver 101.

In some embodiments, compared with the first reference signal involved in the following steps, the third reference signal has lower resource overhead. Optionally, factors affecting the resource overhead of a reference signal may include, but are not limited to, the bandwidth, the frequency-domain density, the time-domain spanning, the time-domain density, and transmit antenna ports of the reference signal.

In some embodiments, the third reference signal has lower resource overhead compared with the first reference signal. Optionally, the lower resource overhead may include at least one of the following: a narrower bandwidth, a lower frequency-domain density, a longer time-domain spanning, a lower time-domain density, and fewer transmit antenna ports.

In some embodiments, the third reference signal has at least one of the following characteristics compared with the first reference signal:
a lower resource overhead, a narrower bandwidth, a lower frequency-domain density, a longer time-domain spanning, a lower time-domain density, and fewer transmit antenna ports.

For example, the third reference signal may only have a narrower bandwidth than the first reference signal; alternatively, the third reference signal may have a narrower bandwidth, lower frequency-domain density, and shorter time-domain spanning than the first reference signal; alternatively, the third reference signal may have a lower time-domain density and fewer transmit antenna ports than the first reference signal; alternatively, the third reference signal may have a shorter time-domain spanning, lower time-domain density, and fewer transmit antenna ports than the first reference signal, and so on. Those skilled in the art may arbitrarily combine the characteristics of the third reference signal relative to the first reference signal according to actual needs, which is not limited by the embodiments of the present disclosure.

**In step S2101-4,** the sensing target 103 measures the third reference signal to obtain first information.

**In** some embodiments, the first information may be obtained by the sensing target 103 through measuring at least one third reference signal. In some embodiments, the measurement performed by the sensing target 103 on the third reference signal may include, for example, measuring the direction, delay, and/or Doppler frequency of the third reference signal. In some embodiments, the measurement performed by the sensing target 103 on the third reference signal may include, for example, performing spectrum estimation on the third reference signal, such as MUSIC spectrum estimation.

**In step S2101-5,** the sensing target 103 sends the first information.

Optionally, the receiver 101 receives the first information sent by the sensing target 103.

**In** some embodiments, the aforementioned steps S2101-1 to S2101-2 and steps S2101-3 to S2101-5 may be executed alternatively. Optionally, the aforementioned steps S2101-1 to S2101-2 and steps S2101-3 to S2101-5 may all be executed, and the receiver 101 may execute subsequent steps by combining the first information obtained in step S2101-2 and the first information obtained in step S2101-5. Optionally, after obtaining the two pieces of first information (i.e., the first information from step S2101-2 and the first information from step S2101-5), the two pieces of first information may be combined in a certain way-for example, adding the two pieces of first information together, but not limited to this; or one of them may be selected in a certain way-for example, based on the priority of the two pieces of first information, or based on the time sequence of the receiver 101 obtaining the two pieces of first information, which is not limited by the present disclosure.

**In** some embodiments, the first information is used to indicate information about the sensing channel state. In some embodiments, the first information is used to indicate relevant information about the direct path corresponding to the sensing target 103 and the Type-1 clutter channel. In some embodiments, the name of the first information is not limited; for example, it may be referred to as sensing channel state information (SCSI), or information used to indicate the sensing channel state, and so on.

In some embodiments, the first information includes at least one of the following: a delay spectrum estimation, an angle spectrum estimation, a Doppler spectrum estimation and an eigen-spectrum estimation.

Optionally, the eigen-spectrum estimation in the first information or some spectrum estimation components of the eigen-spectrum estimation may be used to determine the autocovariance matrix of the multipath channel associated with the sensing target 103. Optionally, the multipath channel associated with the sensing target 103 may include, for example, the direct-path channel corresponding to the sensing target 103 and the Type-1 clutter channel.

For example, the first information may include only any one of the above-mentioned multiple spectrum estimations, such as only delay spectrum estimation or eigen-spectrum estimation. For example, the first information may include multiple ones of the above-mentioned multiple spectrum estimations; for example, the first information may include delay spectrum estimation and angle spectrum estimation, or the first information may include Doppler spectrum estimation and eigen-spectrum estimation, or the first information may include delay spectrum estimation, angle spectrum estimation, Doppler spectrum estimation, and eigen-spectrum estimation. Alternatively, in some possible implementations, the first information may also include other spectrum estimations, which is not limited by the present disclosure.

In some embodiments, the first information includes spectrum estimations within a certain range of at least one of the following: the delay spectrum estimation, the angle spectrum estimation, the Doppler spectrum estimation, and the eigen-spectrum estimation. Optionally, this range may be the second range.

Optionally, the first information may include only one or a part of spectrum estimation components from one or more of the aforementioned spectrum estimations. Optionally, "spectrum component" and "spectrum estimation component" may be used interchangeably. For example, the first information may include the main part or the part with the maximum power from one or more of the aforementioned spectrum estimations. For example, the first information may only contain the top N most important spectrum components. For example, the importance of spectrum components may be determined based on power levels, spectrum metric values, or protocol specifications. The embodiments of the present disclosure do not limit the value of N.

Optionally, if the first information only includes one or a part of spectrum estimation components from one or more of the aforementioned spectrum estimations, when the receiver 101 obtains the first information by measuring the second reference signal, and when the sensing target 103 obtains the first information by measuring the third reference signal, the measurement of the first reference signal or the third reference signal may be performed only within a narrowed range-for example, only measuring the top N components of a certain spectrum estimation. Alternatively, after measuring the second reference signal, the receiver 101 may only incorporate part of the obtained spectrum estimation components (e.g., the spectrum estimation components within the second range) into the first information. Alternatively, after measuring the third reference signal, the sensing target 103 may only send the spectrum estimations within the second range to the receiver 101, for example, only sending part of the spectrum components from one or more spectrum estimations.

In some embodiments, the second range is at least one of the following, or the first information may include at least one of the following:
first N₁ delay components with highest power in the delay spectrum estimation; first N₂ angle components with highest power in the angle spectrum estimation; first N₃ Doppler components with highest power in the Doppler spectrum estimation; first N₄ delay components with largest multiple signal classification (MUSIC) spectrum metric values in the delay spectrum estimation; first N₅ angle components with largest MUSIC spectrum metric values in the angle spectrum estimation; first N₆ Doppler components with largest MUSIC spectrum metric values in the Doppler spectrum estimation; and eigenvectors corresponding to first N₇ largest eigenvalues in the eigen-spectrum estimation; where values of N₁, N₂, N₃, N₄, N₅, N₆ and N₇ are greater than or equal to 1.

Optionally, the values of N₁ and N₄ may be less than or equal to the total number of delay components, the values of N₂ and N₅ may be less than or equal to the total number of angle components, the values of N₃ and N₆ may be less than or equal to the total number of Doppler components, and the value of N₇ may be less than or equal to the total number of eigenvectors.

Optionally, the delay component may also be a delay value, the angle component may also be an angle value, and the Doppler component may also be a Doppler frequency value. For example, the second range may be the first N₁ delay values with the highest power, the first N₂ angle values with the highest power, and the first N₃ Doppler values with the highest power.

For example, if the second range includes the first N₁ delay components with the highest power, the first N₂ angle components with the highest power, and the first N₆ Doppler components with the highest MUSIC spectrum metric values, the first information may then include the corresponding parts in the spectrum estimation. For instance, the first information may include the first N₁ delay components with the highest power in the delay spectrum estimation, the first N₂ angle components with the highest power in the angle spectrum estimation, and the first N₆ Doppler components with the highest MUSIC spectrum metric values in the Doppler spectrum estimation.

Based on the above example, when the receiver 101 obtains the first information by measuring the second reference signal, it may only incorporate the first N₁ delay components with the highest power, the first N₂ angle components with the highest power, and the first N₆ Doppler components with the highest MUSIC spectrum metric values into the first information. Alternatively, after measuring the third reference signal, the sensing target 103 may only send the first N₁ delay components with the highest power, the first N₂ angle components with the highest power, and the first N₆ Doppler components with the highest MUSIC spectrum metric values to the receiver 101.

In some embodiments, the value of at least one of N₁, N₂, N₃, N₄, N₅, N₆ and N₇ is 1.

Optionally, the values of N₁, N₂, N₃, N₄, N₅, N₆ and N₇ may all be 1, or only some of them may be 1.

For example, the first information may include only one or more of the following: the delay component with the highest power in the delay spectrum estimation; the angle component with the highest power in the angle spectrum estimation; the Doppler component with the highest power in the Doppler spectrum estimation; the delay component with the highest MUSIC spectrum metric value in the delay spectrum estimation; the angle component with the highest MUSIC spectrum metric value in the angle spectrum estimation; the Doppler component with the highest MUSIC spectrum metric value in the Doppler spectrum estimation; and the eigenvector corresponding to the largest eigenvalue in the eigen-spectrum estimation.

Correspondingly, when the receiver 101 obtains the first information by measuring the second reference signal, it may only incorporate the delay component, angle component, and/or Doppler component with the highest power and/or MUSIC spectrum metric value, as well as the eigenvector corresponding to the largest eigenvalue, into the second range.

It is worth noting that, for the first information, the above-mentioned optional implementations may be arbitrarily combined without contradiction.

For example, the receiver 101 may measure the second reference signal, or the sensing target 103 may measure the third reference signal, to obtain all delay components, the angle component with the largest MUSIC spectrum metric value, and the eigenvectors corresponding to the first N₇ largest eigenvalues in the eigen-spectrum estimation, thereby obtaining first information that includes the following spectrum estimations: delay spectrum estimation, angle spectrum estimation including only the angle components with the largest MUSIC spectrum metric values, and eigen-spectrum estimation including only the eigenvectors corresponding to the first N₇ largest eigenvalues. Correspondingly, the second range is: the first N₁ delay components with the highest power in the delay spectrum estimation; the first N₅ angle components with the largest MUSIC spectrum metric value in the angle spectrum estimation; and the eigenvectors corresponding to the first N₇ largest eigenvalues in the eigen-spectrum estimation, where the value of N₁ is equal to the total number of delay components, the value of N₅ is 1, and the value of N₇ is less than the total number of eigenvectors.

**In step S2102,** the transmitter 102 sends a first reference signal.

In some embodiments, the receiver 101 receives the first reference signal.

In some embodiments, the first reference signal may be, for example, a sensing reference signal. Optionally, the first reference signal may be used by the receiver 101 to sense the sensing target 103. Optionally, the first reference signal may be used by the receiver 101 to sense the sensing target 103 according to the first reference signal and the first information.

Optionally, the first reference signal may be used by the receiver 101 to perform measurement on the first reference signal. For example, if the receiver 101 has not obtained the first information before receiving the first reference signal sent by the transmitter 102, the receiver 101 may also directly sense the sensing target 103 based on the first reference signal; if the receiver 101 has obtained the first information before receiving the first reference signal sent by the transmitter 102, the receiver 101 may then sense the sensing target 103 according to the first information and the first reference signal.

Optionally, the first reference signal may be any other reference signal used for sensing, which is not limited in the embodiments of the present disclosure.

Optionally, the transmitter 102 may send the first reference signal in the direction towards the sensing target 103, or may send the first reference signal in the direction towards the receiver 101, or the transmitter 102 may send the first reference signal in all directions.

Optionally, the receiver 101 may receive the first reference signal.

Optionally, the first reference signal may be sent to the receiver 101 after being scattered by scatterers around the sensing target 103.

**In step S2103,** the receiver 101 determines a first autocovariance according to the first information.

In some embodiments, the first autocovariance is determined based on the first information. Optionally, the first autocovariance may be determined according to the eigen-spectrum estimation in the first information or part of eigenvectors in the eigen-spectrum estimation.

Optionally, the first autocovariance may also be the first autocovariance matrix or the first autocorrelation matrix. Optionally, the first autocovariance or the first autocovariance matrix may be the autocovariance of the channel associated with the sensing target 103. Optionally, the channel associated with the sensing target 103 may include the direct path channel corresponding to the sensing target 103 and the Type-1 clutter channel.

In some embodiments, the receiver 101 may obtain the first information by measuring the reference signal sent by the sensing target 103, i.e., the second reference signal, and determine the first autocovariance according to the first information. Optionally, the receiver 101 may also directly receive the first information sent by the sensing target 103, and determine the first autocovariance according to the first information.

**In step S2104,** the receiver 101 determines a second autocovariance according to the first reference signal.

In some embodiments, the second autocovariance is determined according to the first reference signal.

In some embodiments, the receiver 101 may measure the first reference signal and determine the second autocovariance based on the measurement result. For example, the eigen-spectrum estimation corresponding to the first reference signal or part of eigenvectors in the eigen-spectrum estimation may be obtained by measuring the first reference signal, and then the second autocovariance may be determined based on the eigen-spectrum estimation or the part of eigenvectors in the eigen-spectrum estimation.

In some embodiments, step S2103 may include a step of: measuring the first reference signal according to a first range.

Optionally, the first range may be determined according to the first information. Optionally, the first range is determined based on the spectrum estimation components included in the first information. Optionally, the first range may be the same as the second range or different from the second range; for example, the first range may be larger than the second range or smaller than the second range.

For example, after the receiver 101 obtains the first information, it may determine the spectrum estimation components included in the first information, and further determine the first range.

For example, the first information includes the angle component corresponding to an angle of 30 degrees in the angle spectrum estimation. Based on this first information, the first range may be determined as 25 to 35 degrees, and further, the receiver 101 may only measure the angle components of the first reference signal within the range of 25 degrees to 30 degrees.

In another example, if the second range includes the first N angle components with the highest power, and in the first information obtained based on this second range, the angles corresponding to these angle components are 25-30 degrees, then the first range may be determined as 20-35 degrees, and further, the receiver 101 may only measure the angle components of the first signal within the range of 20 degrees to 30 degrees.

For example, if the second range includes the first N₁ delay components with the highest power in the delay spectrum estimation; the first N₅ angle components with the largest MUSIC spectrum metric values in the angle spectrum estimation; and the eigenvectors corresponding to the first N₇ largest eigenvalues in the eigen-spectrum estimation, and the first range is the same as the second range, then the receiver 101 may only measure the first N₁ delay components with the highest power in the delay spectrum estimation, the first N5 angle components with the largest MUSIC spectrum metric values in the angle spectrum estimation, and the eigenvectors corresponding to the first N₇ largest eigenvalues in the eigen-spectrum estimation corresponding to the first reference signal.

Optionally, the second autocovariance may be the autocovariance of the channel that includes all direct waves and all scattered waves. Optionally, the second autocovariance may include the autocovariances of the direct path channel, the Type-2 clutter channel, and the Type-1 clutter channel corresponding to the sensing target 103. Optionally, the second autocovariance may also be the second autocovariance matrix or the second autocorrelation matrix.

**In step S2105,** the receiver 101 determines a third autocovariance according to the first autocovariance and the second autocovariance.

**In** some embodiments, the third autocovariance is determined according to the first autocovariance and the second autocovariance.

Optionally, the third autocovariance is the autocovariance of the Type-2 clutter channel. Optionally, the third autocovariance may also be a third autocovariance matrix or a third autocorrelation matrix.

**In** some embodiments, the second autocovariance may include the autocovariance of the channels of all direct waves and all scattered waves, and the first reference signal may include the direct path channel and the Type-1 interference channel. The first autocovariance may be subtracted from the second autocovariance to obtain the autocovariance including only the Type-2 interference channel, which is the third autocovariance.

**In step S2106,** the receiver 101 senses the sensing target 103 according to the second autocovariance and the third autocovariance.

Optionally, a sensing result may be obtained by sensing the sensing target 103, which indicates information such as the distance, angle, and/or speed of the sensing target 103. This sensing result may be, for example, a spectrum estimation result. For example, the delay of the channel corresponding to the sensing target 103 may be used to indicate the distance of the sensing target 103; the Doppler frequency of the channel corresponding to the sensing target 103 may be used to indicate the speed of the sensing target 103; and the angle of the channel corresponding to the sensing target 103 may be used to indicate the angle of the sensing target 103. Optionally, information such as the distance, angle, and/or speed of the sensing target 103 may be collectively referred to as the second information.

In some embodiments, step S2106 may specifically include the following steps: subtracting the third autocovariance from the second autocovariance to obtain a first calculation result; determining an orthogonal basis of a noise subspace according to the first calculation result and performing spectrum estimation to obtain a spectrum estimation result for indicating the second information of the sensing target 103.

In other embodiments, step S2106 may specifically include the following steps: projecting the second autocovariance onto a null space of the third autocovariance to obtain a second calculation result; determining an orthogonal basis of a noise subspace based on the second calculation result and performing spectrum estimation to obtain a spectrum estimation result for indicating the second information of the sensing target 103.

In some embodiments, in step S2106, the influence related to the third autocovariance in the second autocovariance may also be removed in other ways, and calculations may be performed based on the second autocovariance from which the influence of the third autocovariance is removed to obtain a spectrum estimation result used to indicate information about the sensing target. Embodiments of the present disclosure do not impose limitations on this.

In some embodiments, the step of determining the orthogonal basis of the noise subspace may be omitted, and spectrum estimation may be directly performed based on the first calculation result, the second calculation result, or the second autocovariance from which the influence of the third autocovariance is removed.

Optionally, the spectrum estimation result may include, for example, one or more of the following spectrum estimations: delay spectrum estimation, angle spectrum estimation, Doppler spectrum estimation, and eigen-spectrum estimation. Optionally, the spectrum estimation result may further include spectrum estimations within a third range in at least one of the following: delay spectrum estimation, angle spectrum estimation, Doppler spectrum estimation, and eigen-spectrum estimation. Optionally, the third range may be determined based on the second range or the first range.

Optionally, the second information may include information such as the distance, angle, and/or speed of the sensing target 103. Optionally, the second information may also be a sensing result or sensing information. Optionally, the spectrum estimation result may also be a sensing result or a sensing spectrum estimation. Embodiments of the present disclosure do not impose limitations on the names.

In some embodiments, the first calculation result and/or the second calculation result may be autocovariance. Optionally, the first calculation result and/or the second calculation result may be the autocovariance of the channels of all direct waves and all scattered waves excluding the Type-2 clutter channel.

It can be understood that since the third autocovariance may only include the autocovariance of the Type-2 clutter channel, subtracting the third autocovariance from the second autocovariance and projecting the second autocovariance onto the null space of the third autocovariance can exclude the autocovariance of the Type-2 clutter channel from the second autocovariance. This enables the obtained first calculation result or second calculation result to eliminate the influence caused by Type-2 scatterers, thereby making the obtained spectrum estimation result or sensing result more accurate.

In some embodiments, each of the aforementioned steps S2101-1 to S2106 may be executed in different time units respectively. Optionally, steps S2101-1 to S2101-2 or steps S2101-3 to S2101-5 may be executed in the first time unit, and steps S2102 to S2106 may be executed in the second time unit. Optionally, steps S2101-1 to S2101-2 or steps S2101-3 to S2101-5 may be executed in the first time unit, and steps S2103 to S2106 may be executed in the second time unit. Optionally, steps S2101-1 to S2101-2 or steps S2101-3 to S2101-5 may be executed in the first time unit, and step S2106 may be executed in the second time unit.

Optionally, "time unit" may be replaced with "time-domain resource unit" or "time-domain unit". Optionally, the first time unit may also be referred to as a reception time unit, and the second time unit may also be referred to as a measurement time unit. Embodiments of the present disclosure do not impose limitations on the names of the first time unit and the second time unit. Optionally, the first time unit and the second time unit are each any one of the following: an OFDM symbol, a slot, a subframe, and a frame. Optionally, the first time unit and the second time unit may be the same or different. For example, the first time unit may be an OFDM symbol while the second time unit is a slot; alternatively, the first time unit may be a slot while the second time unit is a frame; or, the first time unit may be a subframe while the second time unit is an OFDM symbol, and so on.

The wireless sensing method involved in the embodiments of the present disclosure may include at least one of steps S2101-1 to S2104. For example, step S2101-2 may be implemented as an independent embodiment, step S2102 may be implemented as an independent embodiment, step S2103 may be implemented as an independent embodiment, step S2106 may be implemented as an independent embodiment, steps S2101-1 to S2101-2 and step S2102 may be implemented as an independent embodiment, and steps S2103 to S2106 may be implemented as an independent embodiment, but it is not limited thereto.

In some embodiments, step S2102, step S2103 and step S2104 may be executed in an exchanged order or simultaneously, and step S2103 and step S2104 may be executed in an exchanged order or simultaneously.

In some embodiments, steps S2102 to S2106 are optional, and one or more of these steps may be omitted or replaced in different embodiments.

In some embodiments, steps S2101-1 to S2104 are optional, and one or more of these steps may be omitted or replaced in different embodiments.

In some embodiments, steps S2101-1 to S2102 and steps S2104 to S2106 are optional, and one or more of these steps may be omitted or replaced in different embodiments.

In the embodiments of the present disclosure, for some or all of the steps, the optional implementation manners thereof may be arbitrarily combined with some or all of the steps in other embodiments, and may also be arbitrarily combined with the optional implementation manners of other embodiments.

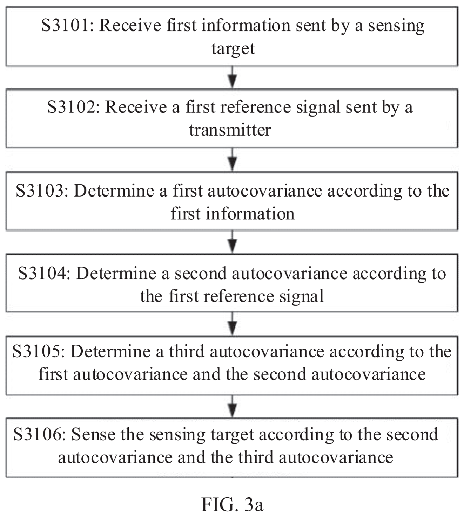

FIG. 3a is a schematic flow chart of a wireless sensing method shown according to an embodiment of the present disclosure. As shown in FIG. 3a, the embodiment of the present disclosure relates to a wireless sensing method, which is executed by a receiver 101 and includes the following.

**In step S3101,** first information sent by a sensing target 103 is received.

In some embodiments, the first information is obtained by the sensing target 103 through measuring at least one third reference signal. Optionally, the third reference signal is sent by a transmitter 102. Optionally, the third reference signal may be a pre-sensing reference signal, for example. Optionally, the third reference signal may be used to instruct the sensing target 103 to obtain the first information by measuring the third reference signal.

For the optional implementations of step S3101, reference may be made to the optional implementations of steps S2101-3 to S2101-5 in FIG. 2, as well as other relevant parts in the embodiments involved in FIG. 2, which will not be repeated herein.

**In step S3102,** a first reference signal sent by a transmitter 102 is received.

For the optional implementations of step S3102, reference may be made to the optional implementations of step S2102 in FIG. 2, as well as other relevant parts in the embodiments involved in FIG. 2, which will not be repeated herein.

**In step S3103,** a first autocovariance is determined according to the first information.

For the optional implementations of step S3103, reference may be made to the optional implementations of step S2103 in FIG. 2, as well as other relevant parts in the embodiments involved in FIG. 2, which will not be repeated herein.

**In step S3104,** a second autocovariance is determined according to the first reference signal.

For the optional implementations of step S3104, reference may be made to the optional implementations of step S2104 in FIG. 2, as well as other relevant parts in the embodiments involved in FIG. 2, which will not be repeated herein.

**In step S3105,** a third autocovariance is determined according to the first autocovariance and the second autocovariance.

For the optional implementations of step S3105, reference may be made to the optional implementations of step S2105 in FIG. 2, as well as other relevant parts in the embodiments involved in FIG. 2, which will not be repeated herein.

**In step S3106:** the sensing target 103 is sensed according to the second autocovariance and the third autocovariance.

For the optional implementations of step S3106, reference may be made to the optional implementations of step S2106 in FIG. 2, as well as other relevant parts in the embodiments involved in FIG. 2, which will not be repeated herein.

In some embodiments, each of the aforementioned steps S3101 to S3106 may be executed in different time units respectively. Optionally, step S3101 may be executed in the first time unit, and steps S3102 to S3106 may be executed in the second time unit. Optionally, step S3101 may be executed in the first time unit, and steps S3103 to S3106 may be executed in the second time unit. Optionally, step S3101 may be executed in the first time unit, and step S3106 may be executed in the second time unit.

For the optional implementations of the first time unit and the second time unit, reference may be made to the relevant parts in the embodiments involved in FIG. 2, which will not be repeated herein. The wireless sensing method involved in the embodiments of the present disclosure may include at least one of steps S3101 to S3105. For example, step S3101 may be implemented as an independent embodiment, step S3102 may be implemented as an independent embodiment, step S3103 may be implemented as an independent embodiment, step S3105 may be implemented as an independent embodiment, steps S3101 and S3102 may be implemented as an independent embodiment, and steps S3103 to S3105 may be implemented as an independent embodiment, but it is not limited thereto.

In some embodiments, step S3102, step S3103 and step S3104 may be executed in an exchanged order or simultaneously, and step S3103 and step S3104 may be executed in an exchanged order or simultaneously.

In some embodiments, steps S3102 to S3105 are optional, and one or more of these steps may be omitted or replaced in different embodiments.

In some embodiments, steps S3101 to S3104 are optional, and one or more of these steps may be omitted or replaced in different embodiments.

In some embodiments, steps S3101 to S3102 and steps S3104 to S3105 are optional, and one or more of these steps may be omitted or replaced in different embodiments.

In the embodiments of the present disclosure, for some or all of the steps, the optional implementation manners thereof may be arbitrarily combined with some or all of the steps in other embodiments, and may also be arbitrarily combined with the optional implementation manners of other embodiments.

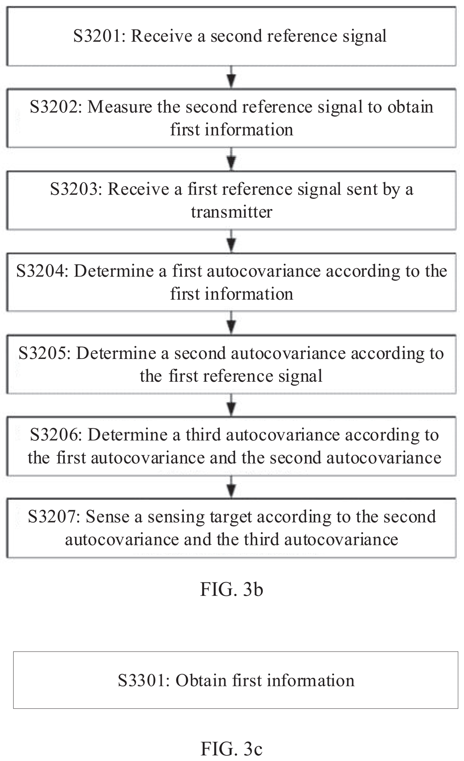

FIG. 3b is a schematic flow chart of a wireless sensing method shown according to an embodiment of the present disclosure. As shown in FIG. 3b, the embodiment of the present disclosure relates to a wireless sensing method, which is executed by a receiver 101 and includes the following.

**In step S3201,** a second reference signal is received.

**In step S3202,** the second reference signal is measured to obtain first information.

For the optional implementations of step S3201 and step S3102, reference may be made to the optional implementations of steps S2101-1 to S2101-2 in FIG. 2, as well as other relevant parts in the embodiments involved in FIG. 2 and FIG. 3a, which will not be repeated herein.

**In step S3203,** a first reference signal sent by a transmitter 102 is received.

For the optional implementations of step S3203, reference may be made to the optional implementation of step S2102 in FIG. 2 or step S3102 in FIG. 3a, as well as other relevant parts in the embodiments involved in FIG. 2 and FIG. 3a, which will not be repeated herein.

**In step S3204,** a first autocovariance is determined according to the first information.

For the optional implementations of step S3204, reference may be made to the optional implementations of step S2103 in FIG. 2 or step S3103 in FIG. 3a, as well as other relevant parts in the embodiments involved in FIG. 2 and FIG. 3a, which will not be repeated herein.

**In step S3205,** a second autocovariance is determined according to the first reference signal.

For the optional implementations of step S3204, reference may be made to the optional implementations of step S2104 in FIG. 2 and step S3104 in FIG. 3a, as well as other relevant parts in the embodiments involved in FIG. 2 and FIG. 3a, which will not be repeated herein.

**In step S3206,** a third autocovariance is determined according to the first autocovariance and the second autocovariance.

For the optional implementations of step S3206, reference may be made to the optional implementations of step S2105 in FIG. 2 and step S3105 in FIG. 3a, as well as other relevant parts in the embodiments involved in FIG. 2 and FIG. 3a, which will not be repeated herein.

**In step S3207,** a sensing target 103 is sensed according to the second autocovariance and the third autocovariance.

For the optional implementations of step S3207, reference may be made to the optional implementation of step S2106 in FIG. 2 or step S3106 in FIG. 3a, as well as other relevant parts in the embodiments involved in FIG. 2 and FIG. 3a, which will not be repeated herein.

**In** some embodiments, each of the aforementioned steps S3201 to S3207 may be executed in different time units respectively. Optionally, step S3201 and/or step S3202 may be executed in the first time unit, and steps S3203 to S3207 may be executed in the second time unit. Optionally, step S3202 may be executed in the first time unit, and steps S3203 to S3107 may be executed in the second time unit. Optionally, step S3201 and/or step S3202 may be executed in the first time unit, and step S3207 may be executed in the second time unit.

For the optional implementation manners of the first time unit and the second time unit, reference may be made to the relevant parts in the embodiments involved in FIG. 2, FIG. 3a, FIG. 3b, and FIG. 3c, which will not be repeated herein. The wireless sensing method involved in the embodiment of the present disclosure may include at least one of steps S3201 to S3207. For example, step S3202 may be implemented as an independent embodiment, step S3204 may be implemented as an independent embodiment, step S3207 may be implemented as an independent embodiment, steps S3201 and S3202 may be implemented as an independent embodiment, and steps S3203 to S3207 may be implemented as an independent embodiment, but it is not limited thereto.

**In** some embodiments, step S3203, step S3204 and step S3205 may be executed in an exchanged order or simultaneously, and step S3204 and step S3205 may be executed in an exchanged order or simultaneously.

**In** some embodiments, steps S3203 to S3207 are optional, and one or more of these steps may be omitted or replaced in different embodiments.

**In** some embodiments, steps S3201 to S3203 and steps S3205 to S3207 are optional, and one or more of these steps may be omitted or replaced in different embodiments.

**In** the embodiment of the present disclosure, step S3201 and step S3202 may be combined with step S3102 to step S3106 of FIG. 3a, and step S3202 to step S3207 may be combined with step S3101 of FIG. 3a.

**In** the embodiments of the present disclosure, for some or all of the steps, the optional implementation manners thereof may be arbitrarily combined with some or all of the steps in other embodiments, and may also be arbitrarily combined with the optional implementation manners of other embodiments.

FIG. 3c is a schematic flow chart of a wireless sensing method shown according to an embodiment of the present disclosure. As shown in FIG. 3c, the embodiment of the present disclosure relates to a wireless sensing method, which is executed by a receiver 101 and includes the following.

**In step S3301,** first information is obtained.

**In** some embodiments, with reference to steps S2101-3 to S2101-5 in FIG. 2, or step S3101 in FIG. 3a, the receiver 101 may obtain the first information by receiving the first information sent by the sensing target 103. In some embodiments, step S3301 may include a sub-step: receiving the first information sent by the sensing target 103. Optionally, the first information may be obtained by the sensing target through measuring at least one third reference signal. Optionally, the third reference signal is sent by the transmitter.

**In** some embodiments, with reference to steps S2101-1 to S2101-2 in FIG. 2, the receiver 101 may obtain the first information by receiving the second reference signal sent by the sensing target 103 and measuring the second reference signal. In some embodiments, step S3301 may include sub-steps: receiving the second reference signal; measuring the second reference signal to obtain the first information. Optionally, the second reference signal is sent by the sensing target.

**In** some embodiments, the receiver 101 may also receive the first information from devices other than the sensing target 103 or the transmitter 102. Optionally, the receiver 101 may obtain the first information from a protocol. Optionally, the receiver 101 may receive the first information from a higher layer. Optionally, the receiver 101 may also obtain the first information through its own processing, and so on.

For the optional implementations of step S3301, reference may be made to the optional implementations of steps S2101-1 to S2101-2, steps S2101-3 to S2101-5 in FIG. 2, step S3101 in FIG. 3a, and steps S3201 to S3202 in FIG. 3b, as well as other relevant parts in the embodiments involved in FIG. 2, FIG. 3a, and FIG. 3b, which will not be repeated herein.

**In** the embodiments of the present disclosure, step S3301 may be combined with steps S3102 to S3106 in FIG. 3a; step S3301 may also be combined with steps S3203 to S3207 in FIG. 3b; step S3301 may further be combined with step S3103 in FIG. 3a; step S3301 may additionally be combined with step S3204 in FIG. 3b; and step S3301 may also be combined with any step or the optional implementation of any step in FIG. 2, FIG. 3a, and FIG. 3b.

**In** the embodiments of the present disclosure, for some or all of the steps, the optional implementation manners thereof may be arbitrarily combined with some or all of the steps in other embodiments, and may also be arbitrarily combined with the optional implementation manners of other embodiments.

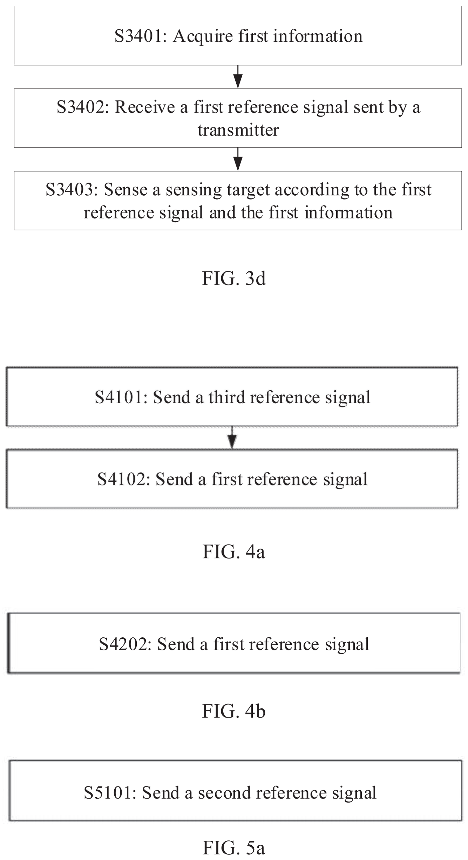

FIG. 3d is a schematic flow chart of a wireless sensing method shown according to an embodiment of the present disclosure. As shown in FIG. 3d, the embodiment of the present disclosure relates to a wireless sensing method, which is executed by a receiver 101 and includes the following.

**In step S3401,** first information is obtained.

Optionally, obtaining the first information includes: receiving a second reference signal, where the second reference signal is sent by a sensing target; and measuring the second reference signal to obtain the first information.

Optionally, the second reference signal is a sounding reference signal.

Optionally, obtaining the first information includes: receiving first information sent by the sensing target 103, where the first information is obtained by the sensing target 103 through measuring at least one third reference signal, and the third reference signal is sent by a transmitter 102.

Optionally, a parameter of each of the at least one third reference signal is different, and the parameter includes at least one of the following: a bandwidth, a frequency-domain density, a time-domain spanning, and a time-domain density.

Optionally, the third reference signal has at least one of the following characteristics compared with the first reference signal:
a lower resource overhead, a narrower bandwidth, a lower frequency-domain density, a shorter time-domain spanning, a lower time-domain density, and fewer transmit antenna ports.

Optionally, the first information includes at least one of the following: a delay spectrum estimation, an angle spectrum estimation, a Doppler spectrum estimation and an eigen-spectrum estimation.

Optionally, the first information includes at least one of the following: first N₁ delay components with highest power in the delay spectrum estimation; first N₂ angle components with highest power in the angle spectrum estimation; first N₃ Doppler components with highest power in the Doppler spectrum estimation; first N₄ delay components with largest multiple signal classification (MUSIC) spectrum metric values in the delay spectrum estimation; first N₅ angle components with largest MUSIC spectrum metric values in the angle spectrum estimation; first N₆ Doppler components with largest MUSIC spectrum metric values in the Doppler spectrum estimation; and eigenvectors corresponding to first N₇ largest eigenvalues in the eigen-spectrum estimation; where values of N₁, N₂, N₃, N₄, N₅, N₆ and N₇ are greater than or equal to 1.

Optionally, the value of at least one of N₁, N₂, N₃, N₄, N₅, N₆ and N₇ is 1.

For the optional implementations of step S3401, reference may be made to the optional implementations of steps S2101-1 to S2101-2, steps S2101-3 to S2101-5 in FIG. 2, step S3101 in FIG. 3a, steps S3201 to S3202 in FIG. 3b, and step S3301 in FIG. 3c, as well as other relevant parts in the embodiments involved in FIG. 2, FIG. 3a, FIG. 3b, and FIG. 3c, which will not be repeated herein.

**In step S3402,** a first reference signal sent by the transmitter 102 is received.

For the optional implementations of step S3401, reference may be made to the optional implementations of step S2102 in FIG. 2, step S3102 in FIG. 3a, step S3203 in FIG. 3b, and step S3302 in FIG. 3c, as well as other relevant parts in the embodiments involved in FIG. 2, FIG. 3a, FIG. 3b, and FIG. 3c, which will not be repeated herein.

**In step S3403,** the sensing target 103 is sensed according to the first information and the first reference signal.

Optionally, sensing the sensing target 103 according to the first reference signal and the first information includes: measuring the first reference signal according to a first range, where the first range is determined according to the first information.

**In** some embodiments, in step S3403, the receiver 101 may measure the first reference signal to obtain a spectrum estimation result corresponding to the first reference signal, then exclude the influence of clutter from the spectrum estimation result based on the first information, and further perform sensing on the sensing target 103.

For example, the spectrum estimation result corresponding to the first reference signal may include a delay spectrum estimation or part of spectrum estimation components in the delay spectrum estimation, and/or an angle spectrum estimation or part of spectrum estimation components in the angle spectrum estimation, and/or a Doppler spectrum estimation or part of spectrum estimation components in the Doppler spectrum estimation. The receiver 101 may exclude the spectrum estimation components corresponding to the first type of clutter from the spectrum estimation result corresponding to the first reference signal based on the spectrum estimation and/or spectrum estimation components included in the first information, thereby realizing the sensing of the sensing target 103. Optionally, the result obtained after excluding the spectrum estimation components corresponding to the first type of clutter from the spectrum estimation result corresponding to the first reference signal may be used to indicate the second information of the sensing target 103.

**In** some other embodiments, step S3403 may be implemented based on the calculation of autocovariance. For example, step S3403 may include the following sub-steps: determining a first autocovariance according to the first information; determining a second autocovariance according to the first reference signal; determining a third autocovariance according to the first autocovariance and the second autocovariance; and performing sensing on the sensing target 103 based on the second autocovariance and the third autocovariance.

Optionally, performing sensing on the sensing target 103 according to the second autocovariance and the third autocovariance includes: subtracting the third autocovariance from the second autocovariance to obtain a first calculation result; determining an orthogonal basis of the noise subspace according to the first calculation result and performing spectrum estimation, so as to obtain a spectrum estimation result used to indicate the second information of the sensing target 103.

Optionally, performing sensing on the sensing target according to the second autocovariance and the third autocovariance includes: projecting the second autocovariance onto the null space of the third autocovariance to obtain a second calculation result; determining an orthogonal basis of a noise subspace according to the second calculation result and performing spectrum estimation, so as to obtain a spectrum estimation result used to indicate the second information of the sensing target 103.

For the optional implementations of step S3403, reference may be made to the optional implementations of steps S2103 to S2106 in FIG. 2, steps S3103 to S3106 in FIG. 3a, and steps S3204 to S3207 in FIG. 3b, as well as other relevant parts in the embodiments involved in FIG. 2, FIG. 3a, FIG. 3b, and FIG. 3c, which will not be repeated herein.

In some embodiments, each of the aforementioned steps S3401 to S3403 may be executed in different time units respectively. Optionally, step S3401 may be executed in the first time unit, and steps S3402 to S3403 may be executed in the second time unit. Optionally, step S3402 may be executed in the first time unit, and step S3403 may be executed in the second time unit. Optionally, step S3401 may be executed in the first time unit, and step S3403 may be executed in the second time unit.

Optionally, obtaining the first information in step S3401 includes the step of: obtaining the first information in the first time unit. In step S3403, performing sensing on the sensing target based on the first reference signal and the first information may include: performing sensing on the sensing target 103 according to the first information and the first reference signal in the second time unit.

For the optional implementation manners of the first time unit and the second time unit, reference may be made to the relevant parts in the embodiments involved in FIG. 2, FIG. 3a, FIG. 3b, and FIG. 3c, which will not be repeated herein.

The wireless sensing method involved in the embodiment of the present disclosure may include at least one of steps S3401 to S3403. For example, step S3401 may be implemented as an independent embodiment, step S3403 may be implemented as an independent embodiment, steps S3301 and S3302 may be implemented as an independent embodiment, and steps S3402 to S3403 may be implemented as an independent embodiment, but it is not limited thereto.

In some embodiments, steps S3402 to S3403 are optional, and one or more of these steps may be omitted or replaced in different embodiments.

In some embodiments, steps S3401 to S3402 are optional, and one or more of these steps may be omitted or replaced in different embodiments.

In the embodiments of the present disclosure, step S3401 may be combined with steps S3102 to S3106 in FIG. 3a, or with steps S3203 to S3207 in FIG. 3b; step S3403 may be combined with steps S3101 to S3102 in FIG. 3a, or with steps S3201 to S3203 in FIG. 3b.

In the embodiments of the present disclosure, for some or all of the steps, the optional implementation manners thereof may be arbitrarily combined with some or all of the steps in other embodiments, and may also be arbitrarily combined with the optional implementation manners of other embodiments.

FIG. 4a is a schematic flow chart of a wireless sensing method shown according to an embodiment of the present disclosure. As shown in FIG. 4a, the embodiment of the present disclosure relates to a wireless sensing method, which is executed by a transmitter 102 and includes the following.

**In step S4101,** a third reference signal is sent.

For the optional implementations of step S4101, reference may be made to the optional implementations of step S2101-3 in FIG. 2 and step S3101 in FIG. 3, as well as other relevant parts in the embodiments involved in FIG. 2, FIG. 3a, FIG. 3b, FIG. 3c, and FIG. 3d, which will not be repeated herein.

**In step S4102,** a first reference signal is sent.

Optionally, the receiver 101 receives the first reference signal.

For the optional implementations of step S4102, reference may be made to the optional implementations of step S2102 in FIG. 2, step S3102 in FIG. 3a, step S3203 in FIG. 3b, and step S3402 in FIG. 3d, as well as other relevant parts in the embodiments involved in FIG. 2, FIG. 3a, FIG. 3b, FIG. 3c, and FIG. 3d, which will not be repeated herein.

The wireless sensing method involved in the embodiments of the present disclosure may include at least one of steps S4101 to S4102. For example, step S4101 may be implemented as an independent embodiment, and step S4102 may be implemented as an independent embodiment, but it is not limited thereto.

In some embodiments, step S4101 is optional, and one or more of these steps may be omitted or replaced in different embodiments.

In some embodiments, step S4102 is optional, and one or more of these steps may be omitted or replaced in different embodiments.

FIG. 4b is a schematic flow chart of a wireless sensing method shown according to an embodiment of the present disclosure. As shown in FIG. 4b, the embodiment of the present disclosure relates to a wireless sensing method, which is executed by the transmitter 102 and includes the following.

**In step S4201,** a first reference signal is sent.

Optionally, the first reference signal is used by a receiver 101 to sense a sensing target 103 according to the first reference signal and first information. Optionally, the first information is used to indicate a sensing channel state.

Optionally, the first information is obtained by the receiver through measuring a second reference signal sent by the sensing target.

Optionally, the second reference signal is a sounding reference signal (SRS).

Optionally, the method further includes the step of: sending at least one third reference signal, and the first information is obtained and sent by sensing the target through measuring the at least one third reference signal.

Optionally, a transmission parameter of each third reference signal in the at least one third reference signal is different, and the transmission parameter includes at least one of the following: a bandwidth, a frequency-domain density, a time-domain spanning, and a time-domain density.

Optionally, the third reference signal has at least one of the following characteristics compared with the first reference signal: a lower resource overhead, a narrower bandwidth, a lower frequency-domain density, a shorter time-domain spanning, a lower time-domain density, and fewer transmit antenna ports.

Optionally, the first information includes at least one of the following: a delay spectrum estimation, an angle spectrum estimation, a Doppler spectrum estimation and an eigen-spectrum estimation.

Optionally, the first information includes at least one of the following: first N₁ delay components with highest power in the delay spectrum estimation; first N₂ angle components with highest power in the angle spectrum estimation; first N₃ Doppler components with highest power in the Doppler spectrum estimation; first N₄ delay components with largest multiple signal classification (MUSIC) spectrum metric values in the delay spectrum estimation; first N₅ angle components with largest MUSIC spectrum metric values in the angle spectrum estimation; first N₆ Doppler components with largest MUSIC spectrum metric values in the Doppler spectrum estimation; and eigenvectors corresponding to first N₇ largest eigenvalues in the eigen-spectrum estimation; where values of N₁, N₂, N₃, N₄, N₅, N₆ and N₇ are greater than or equal to 1.

Optionally, the value of at least one of N₁, N₂, N₃, N₄, N₅, N₆ and N₇ is 1.

For the optional implementations of step S4201, reference may be made to the optional implementations of step S2102 in FIG. 2, step S3102 in FIG. 3a, step S3203 in FIG. 3b, and step S3402 in FIG. 3d, as well as other relevant parts in the embodiments involved in FIG. 2, FIG. 3a, FIG. 3b, FIG. 3c, and FIG. 3d, which will not be repeated herein.

In the embodiments of the present disclosure, for some or all of the steps, the optional implementation manners thereof may be arbitrarily combined with some or all of the steps in other embodiments, and may also be arbitrarily combined with the optional implementation manners of other embodiments.

FIG. 5a is a schematic flow chart of a wireless sensing method shown according to an embodiment of the present disclosure. As shown in FIG. 5a, the embodiment of the present disclosure relates to a wireless sensing method, which is performed by a sensing target 103 and includes the following.

**In step S5101,** a second reference signal is sent.

Optionally, receiver 101 receives the second reference signal. Optionally, the second reference signal is used by receiver 101 to measure the second reference signal to obtain first information. Optionally, the first information is used to indicate a sensing channel state. Optionally, the first information is also used by receiver 101 to sense the sensing target 103.

For the optional implementations of step S5101, reference may be made to the optional implementations of step S2101-1 in FIG. 2 and step S3201 in FIG. 3b, as well as other relevant parts in the embodiments involved in FIG. 2, FIG. 3a, FIG. 3b, FIG. 3c, FIG. 3d, FIG. 4a, and FIG. 4b, which will not be repeated herein.

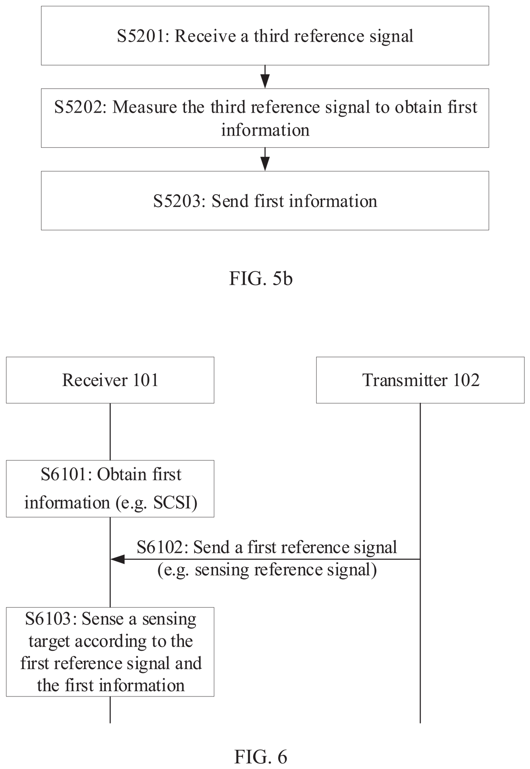

FIG. 5b is a schematic flow chart of a wireless sensing method shown according to an embodiment of the present disclosure. As shown in FIG. 5b, the embodiment of the present disclosure relates to a wireless sensing method, which is performed by the sensing target 103 and includes the following.

**In step S5201,** a third reference signal is received.

Optionally, the third reference signal is sent by a transmitter 102. Optionally, the sensing target 103 may receive at least one third reference signal.

For the optional implementations of step S5201, reference may be made to the optional implementations of step S2101-3 in FIG. 2, step S3101 in FIG. 3a, and step S4101 in FIG. 4a, as well as other relevant parts in the embodiments involved in FIG. 2, FIG. 3a, FIG. 3b, FIG. 3c, FIG. 3d, FIG. 4a, FIG. 4b, and FIG. 5a, which will not be repeated herein.

**In step S5202,** a third reference signal is measured to obtain first information.

Optionally, the sensing target 103 may measure at least one third reference signal to obtain the first information.

For the optional implementations of step S5202, reference may be made to the optional implementations of step S2101-4 in FIG. 2, step S3101 in FIG. 3a, and step S4101 in FIG. 4a, as well as other relevant parts in the embodiments involved in FIG. 2, FIG. 3a, FIG. 3b, FIG. 3c, FIG. 3d, FIG. 4a, FIG. 4b, and FIG. 5a, which will not be repeated herein.

**In step S5203,** the first information is sent.

Optionally, the receiver 101 receives first information.

Optionally, the sensing target 103 may send the first information to the receiver 101.

For the optional implementations of step S5203, reference may be made to the optional implementations of step S2101-5 in FIG. 2 and step S3101 in FIG. 3a, as well as other relevant parts in the embodiments involved in FIG. 2, FIG. 3a, FIG. 3b, FIG. 3c, FIG. 3d, FIG. 4a, FIG. 4b, and FIG. 5a, which will not be repeated herein.

In the embodiments of the present disclosure, for some or all of the steps, the optional implementation manners thereof may be arbitrarily combined with some or all of the steps in other embodiments, and may also be arbitrarily combined with the optional implementation manners of other embodiments.

FIG. 6 is a schematic interaction diagram of a wireless sensing method shown according to an embodiment of the present disclosure. As shown in FIG. 6, the embodiment of the present disclosure relates to a wireless sensing method for a communication system 100, and the method includes the following.

**In step S6101,** a receiver 101 obtains first information.

For the optional implementations of step S6101, reference may be made to the optional implementations of steps S2101-1 to S2101-2, steps S2101-3 to S2101-5 in FIG. 2, step S3101 in FIG. 3a, steps S3201 to S3202 in FIG. 3b, step S3301 in FIG. 3c, and step S3401 in FIG. 3d, as well as other relevant parts in the embodiments involved in FIG. 2, FIG. 3a, FIG. 3b, FIG. 3c, FIG. 3d, FIG. 4a, FIG. 4b, FIG. 5a, and FIG. 5b, which will not be repeated herein.

**In step S6102,** a transmitter 102 sends a first reference signal.

Optionally, the receiver 101 receives the first reference signal.

For the optional implementations of step S6102, reference may be made to the optional implementations of step S2102 in FIG. 2, step S3102 in FIG. 3a, step S3203 in FIG. 3b, step S3402 in FIG. 3d, step S4102 in FIG. 4a, and step S4201 in FIG. 4b, as well as other relevant parts in the embodiments involved in FIG. 2, FIG. 3a, FIG. 3b, FIG. 3c, FIG. 3d, FIG. 4a, FIG. 4b, FIG. 5a, and FIG. 5b, which will not be repeated herein.

**In step S6103,** the receiver 101 senses a sensing target 103 according to the first reference signal and the first information.

For the optional implementations of step S6103, reference may be made to the optional implementations of steps S2103 to S2106 in FIG. 2, steps S3103 to S3106 in FIG. 3a, steps S3204 to S3207 in FIG. 3b, and step S3403 in FIG. 3d, as well as other relevant parts in the embodiments involved in FIG. 2, FIG. 3a, FIG. 3b, FIG. 3c, FIG. 3d, FIG. 4a, FIG. 4b, FIG. 5a, and FIG. 5b, which will not be repeated herein.

In some embodiments, the above-mentioned method may include the methods of the aforementioned embodiments on the transmitter 102 side, the receiver side, and the sensing target side, which will not be repeated herein.

In the embodiments of the present disclosure, for some or all of the steps, the optional implementation manners thereof may be arbitrarily combined with some or all of the steps in other embodiments, and may also be arbitrarily combined with the optional implementation manners of other embodiments.

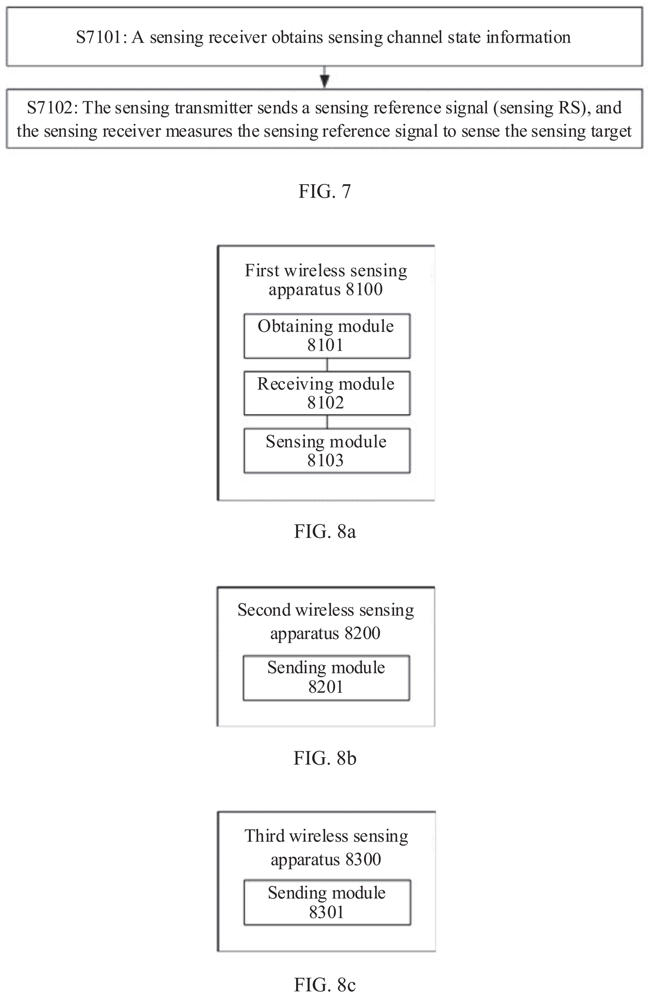

FIG. 7 is a schematic flow chart of a wireless sensing method shown according to an embodiment of the present disclosure. As shown in FIG. 7, the embodiment of the present disclosure relates to a wireless sensing method, which includes the following.

**In step S7101,** a sensing receiver obtains sensing channel state information (SCSI).

In some embodiments, the sensing channel state information may be the first information in the above embodiments.

Specifically, the sensing receiver obtains sensing channel state information, i.e., spectrum estimation, through the following two schemes:
Scheme 1: a sensing target sends a sounding reference signal, and the sensing receiver obtains SCSI through measuring the reference signal.

The sounding reference signal may be the second reference signal in the above embodiments.

Scheme 2: a sensing transmitter sends a pre-sensing reference signal (pre-sensing RS), based on which the sensing target measures the pre-sensing RS and reports the SCSI to the sensing receiver.

The pre-sensing reference signal may be the third reference signal in the above embodiments.

**In step S7102,** the sensing transmitter sends a sensing reference signal (sensing RS), and the sensing receiver measures the sensing reference signal to sense the sensing target.

The sensing reference signal may be the first reference signal in the above embodiments.

The sensing transmitter sends the sensing reference signal (sensing RS), the sensing receiver measures the sensing reference signal, and senses the sensing target according to the SCSI obtained in step S7101.

According to the first step described in section 1, the SCSI may be at least one of delay spectrum estimation, angle spectrum estimation, Doppler spectrum estimation, or eigen-spectrum estimation (e.g., the autocovariance matrix of the multipath channel associated with the sensing target, including the direct path channel and the Type-1 clutter channel corresponding to the sensing target). Furthermore, the SCSI may be either a complete spectrum estimation or a part of the spectrum estimation (such as the main part or the part with the maximum power). For example, the SCSI may only include the top N most significant spectrum components. Specific examples include the top N delay components (delay values) with the maximum power, the top N angle components (angle values) with the maximum power, the top N Doppler components (Doppler frequency values) with the maximum power, and the eigenvectors corresponding to the top N largest eigenvalues. In particular, N = 1.

In scheme 1 of step S7101, the sounding reference signal may be an SRS.

In step S7101, compared with the sensing reference signal in step 2, the pre-sensing reference signal described in scheme 2 generally occupies lower resource overhead. For example, it has at least one of the following characteristics: a narrower bandwidth, a lower frequency-domain density, a shorter time-domain spanning, a lower time-domain density, and fewer transmit antenna ports, etc.

In step S7101, the pre-sensing reference signal described in scheme 2 may be sent multiple times.

In some embodiments, parameters (including at least one of the bandwidth, the frequency-domain density, the time-domain spanning, and the time-domain density) of multiple transmissions of the pre-sensing reference signal may be different. For example, the bandwidth may be increasingly larger, and/or the frequency-domain density may be increasingly larger, and/or the time-domain spanning may be increasingly larger, and/or the time-domain density may be increasingly larger.

In some embodiments, step S7101 and step S7102 are performed in different time units, which may be an OFDM symbol, a time slot, a subframe, or a frame.

In some embodiments, the sensing transmitter sends the sensing reference signal in step S7102, and the sensing receiver may scan within a reduced range when performing spectrum estimation (such as MUSIC) based on the sensing reference signal. The reduced range is determined by the SCSI obtained in step S7101.

In some embodiments, based on the sounding reference signal transmitted by the sensing target in scheme 1 of step S7101, the sensing receiver can estimate the autocovariance (matrix) of the channel associated with the sensing target (including the direct path channel and Type-1 clutter channel corresponding to the sensing target), denoted as autocovariance 1. Furthermore, based on the sensing reference signal in step 2, the sensing receiver can obtain the autocovariance (matrix) of the channels containing all direct waves and all scattered waves, denoted as autocovariance 2. Based on autocovariance 1 and autocovariance 2, the sensing receiver can obtain the autocovariance (matrix) of the Type-2 clutter channel, denoted as autocovariance 3. Based on this, the sensing receiver can first perform one of the following operations, then calculate the orthogonal basis of the noise subspace and perform spectrum estimation (such as MUSIC, etc.).
Operation 1: The sensing receiver may subtract autocovariance 3 from autocovariance 2 in advance;
Operation 2: The sensing receiver may first project autocovariance 2 onto the null space of autocovariance 3.

The autocovariance 1 may be the first autocovariance in the above embodiments, the autocovariance 2 may be the second autocovariance in the above embodiments, and the autocovariance 3 may be the third autocovariance in the above embodiments.

In the embodiments of the present disclosure, for some or all of the steps, the optional implementation manners thereof may be arbitrarily combined with some or all of the steps in other embodiments, and may also be arbitrarily combined with the optional implementation manners of other embodiments.

An embodiment of the present disclosure further provides an apparatus for implementing any one of the above methods. For example, an apparatus is provided, which includes units for implementing each step performed by a terminal in any one of the above methods. For another example, another apparatus is also provided, which includes units for implementing each step performed by a network device (such as a receiver, a transmitter, a sensing target, an access network device, a core network function node, a core network device, etc.) in any one of the above methods.

It should be understood that the division of each unit in the above apparatus is merely a division of logical functions. In actual implementation, all or part of the units may be integrated into a single physical entity, or they may be physically separated. In addition, the units in the apparatus may be implemented in the form of a processor invoking software. For example, the apparatus includes a processor, which is connected to a memory, the memory stores computer instructions, and the processor invokes the computer instructions stored in the memory to implement any one of the above methods or the functions of each unit of the above apparatus. The processor is, for example, a general-purpose processor such as a central processing unit (CPU) or a microprocessor, and the memory is a memory inside the apparatus or a memory outside the apparatus. Alternatively, the units in the apparatus may be implemented in the form of hardware circuits, and the functions of some or all units may be realized through the design of hardware circuits. The above hardware circuits may be understood as one or more processors. For example, in one implementation, the above hardware circuit is an application-specific integrated circuit (ASIC), and the functions of some or all of the above units are realized through the design of the logical relationships of components in the circuit. For another example, in another implementation, the above hardware circuit may be implemented by a programmable logic device (PLD). Taking a field programmable gate array (FPGA) as an example, it may include a large number of logic gate circuits, and the connection relationships between the logic gate circuits are configured through configuration files, thereby realizing the functions of some or all of the above units. All units of the above apparatus may be entirely implemented in the form of the processor invoking software, or entirely in the form of hardware circuits, or part of the units in the form of the processor invoking software and the remaining part in the form of hardware circuits.

In the embodiments of the present disclosure, a processor is a type of circuit with signal processing capability. In one implementation, the processor may be a circuit capable of reading and executing instructions, such as a central processing unit (CPU), a microprocessor, a graphics processing unit (GPU) (which can be understood as a type of microprocessor), or a digital signal processor (DSP), etc. In another implementation, the processor may realize certain functions through the logical relationships of a hardware circuit, where the logical relationships of the aforementioned hardware circuit are either fixed or reconfigurable. For example, the processor is a hardware circuit implemented by an application-specific integrated circuit (ASIC) or a programmable logic device (PLD), such as a field-programmable gate array (FPGA). In a reconfigurable hardware circuit, the process in which the processor loads a configuration file to realize the configuration of the hardware circuit can be understood as the process in which the processor loads instructions to realize the functions of some or all of the aforementioned units. In addition, the processor may also be a hardware circuit designed for artificial intelligence, which can be understood as a type of ASIC, such as a neural network processing unit (NPU), a tensor processing unit (TPU), or a deep learning processing unit (DPU), etc.

FIG. 8a is a schematic structural diagram of a first wireless sensing apparatus provided by an embodiment of the present disclosure. As shown in FIG. 8a, the first wireless sensing apparatus 8100 includes:
an obtaining module 8101, configured to obtain first information, where the first information is used to indicate a sensing channel state;
a receiving module 8102, configured to receive a first reference signal sent by a transmitter; and
a sensing module 8103, configured to sense a sensing target according to the first reference signal and the first information.

Optionally, the above-mentioned obtaining module 8101 is configured to perform the steps related to obtaining first information executed by the receiver in any one of the above methods, which will not be repeated herein. Optionally, the above-mentioned receiving module 8102 is configured to perform the steps related to the reception of the first reference signal executed by the receiver in any one of the above methods, which will not be repeated herein. Optionally, the sensing module 8103 may be configured to perform the steps of sensing the sensing target executed by the receiver in any one of the above methods. Optionally, the first wireless sensing apparatus 8100 further includes a measurement module, and the above-mentioned measurement module is configured to perform the steps related to reference signal measurement executed by the receiver in any one of the above methods, which will not be repeated herein.

FIG. 8b is a schematic structural diagram of a second wireless sensing apparatus provided by an embodiment of the present disclosure. As shown in FIG. 8b, the second wireless sensing apparatus 8200 includes:
a sending module 8201, configured to send a first reference signal, where the first reference signal is used by a receiver to sense a sensing target according to the first reference signal and first information, where the first information is used to indicate a sensing channel state.

Optionally, the above-mentioned sending module 8201 is configured to perform the steps related to the transmission of the first reference signal executed by the transmitter in any one of the above methods, which will not be repeated herein. Optionally, the sending module 8201 may also be configured to perform the steps related to the transmission of the third reference signal executed by the transmitter in any one of the above methods, which will not be repeated herein.

FIG. 8c is a schematic structural diagram of a third wireless sensing apparatus provided in an embodiment of the present disclosure. As shown in FIG. 8c, the third wireless sensing apparatus 8300 includes:
a sending module 8301, configured to send a second reference signal.

Optionally, the sending module 8301 may be a first sending module. Optionally, the second reference signal is used by the receiver to measure the second reference signal to obtain first information. Optionally, the first information is used to indicate a sensing channel state. Optionally, the first information is also used by the receiver to sense the sensing target.

Optionally, the third wireless sensing device 8300 may further include a measurement module and a receiving module. Optionally, the receiving module may be configured to perform the steps related to receiving the third reference signal executed by the sensing target in any one of the above methods. Optionally, the measurement module may be configured to perform the steps related to measuring the third reference signal executed by the sensing target in any one of the above methods. Optionally, the sending module 8301 may also be configured to perform the steps related to sending the first information executed by the sensing target in any of the above methods.

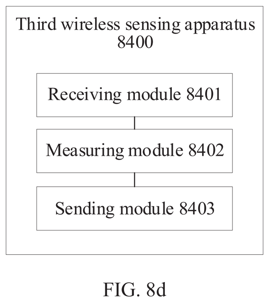

FIG. 8d is a schematic structural diagram of a third wireless sensing apparatus provided by an embodiment of the present disclosure. As shown in FIG. 8d, the third wireless sensing apparatus 8400 includes:
a receiving module 8401, configured to receive at least one third reference signal;
a measuring module 8402, configured to measure the at least one third reference signal to obtain first information;
optionally, the third reference signal is sent by a transmitter; and
a sending module 8403, configured to send the first information.

Optionally, the first information is used to indicate a sensing channel state, and the first information is further used by the receiver to sense a sensing target.

Optionally, the sending module 8403 may be a second sending module. Optionally, the sending module 8403 may also be configured to perform steps related to sending the first information executed by the sensing target in any one of the above methods.

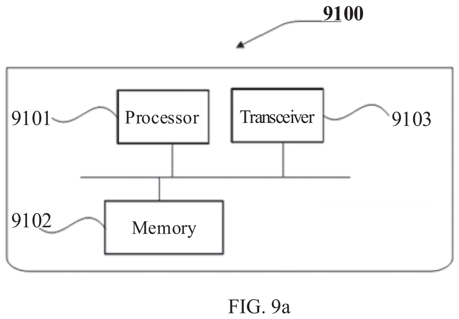

FIG. 9a is a schematic structural diagram of a communication device 9100 provided by an embodiment of the present disclosure. The communication device 9100 may be a network device (such as an access network device, a core network device, etc.), a terminal (such as a user equipment, etc.), a chip, a chip system, or a processor that supports the network device in implementing any one of the above methods, or a chip, a chip system, or a processor that supports the terminal in implementing any one of the above methods. The communication device 9100 may be used to implement the methods described in the above method embodiments, and for details, reference can be made to the descriptions in the above method embodiments.

As shown in FIG. 9a, the communication device 9100 includes one or more processors 9101. The processor 9101 may be a general-purpose processor, a special-purpose processor, etc.; for example, it may be a baseband processor or a central processing unit. The baseband processor may be used to process communication protocols and communication data, and the CPU may be used to control the communication apparatus (e.g., a base station, a baseband chip, a terminal device, a terminal device chip, a DU, a CU, etc.), execute programs, and process program data. The processor 9101 is used to invoke instructions to cause the communication device 9100 to execute any of the above methods.

In some embodiments, the communication device 9100 further includes one or more memories 9102 for storing instructions. Optionally, all or part of the memory 9102 may also be located outside the communication device 9100.

In some embodiments, the communication device 9100 further includes one or more transceivers 9103. When the communication device 9100 includes one or more transceivers 9103, communication steps such as sending and receiving in the above methods are performed by the transceivers 9103, and other steps are performed by the processor 9101.

In some embodiments, a transceiver may include a receiver and a transmitter, where the receiver and the transmitter may be separate or integrated Optionally, terms such as transceiver, transceiver unit, transceiver device, and transceiver circuit may be used interchangeably; terms such as transmitter, transmitting unit, transmitter device, and transmitting circuit may be used interchangeably; and terms such as receiver, receiving unit, receiver device, and receiving circuit may be used interchangeably.

Optionally, the communication device 9100 further includes one or more interface circuits 9104. The interface circuits 9104 are connected to the memory 9102, and may be configured to receive signals from the memory 9102 or other devices, and may also be configured to send signals to the memory 9102 or other devices. For example, the interface circuit 9104 may read the instructions stored in the memory 9102 and send the instructions to the processor 9101.

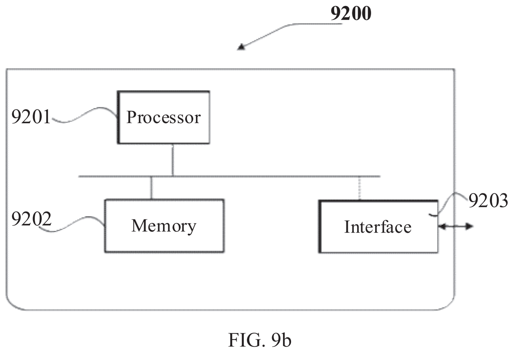

The communication device 9100 described in the above embodiments may be a network device or a terminal, but the scope of the communication device 9100 described in the present disclosure is not limited thereto, and the structure of the communication device 9100 may not be restricted by FIG. 9a. The communication device may be an independent device or a part of a larger device. For example, the communication device may be: 1) an independent integrated circuit (IC), a chip, a chip system, or a subsystem; (2) a collection of one or more ICs, optionally, the above IC collection may further include a storage component for storing data and programs; (3) an ASIC, such as a modem; (4) a module that can be embedded in other devices; (5) a receiver, a terminal device, an intelligent terminal device, a cellular phone, a wireless device, a handheld device, a mobile unit, a vehicle-mounted device, a network device, a cloud device, an artificial intelligence device, etc.; (6) others, etc. FIG. 9b is a schematic structural diagram of a chip 9200 provided by an embodiment of the present disclosure. For the case where the communication device 9100 may be a chip or a chip system, reference may be made to the schematic structural diagram of the chip 9200 shown in FIG. 9b, but it is not limited thereto.

FIG. 9b is a schematic structural diagram of a chip 9200 provided by an embodiment of the present disclosure. For the case where the communication device 9100 may be a chip or a chip system, reference may be made to the schematic structural diagram of the chip 9200 shown in FIG. 9b, but it is not limited thereto.

The chip 9200 includes one or more processors 9201, and the processors 9201 are configured to invoke instructions to cause the chip 9200 to execute any of the above methods.

In some embodiments, the chip 9200 further includes one or more interface circuits 9202. The interface circuits 9202 are connected to the memory 9203, and may be configured to receive signals from the memory 9203 or other devices, and also may be configured to send signals to the memory 9203 or other devices. For example, the interface circuit 9202 may read the instructions stored in the memory 9203 and send the instructions to the processor 9201. Optionally, terms such as interface circuit, interface, transceiving pin, and transceiver may be used interchangeably.

In some embodiments, the chip 9200 further includes one or more memories 9203 for storing instructions. Optionally, all or part of the memory 9203 may be located outside the chip 9200.

The present disclosure further provides a storage medium having instructions stored thereon. The instructions, when executed on the communication device 8100, cause the communication device 8100 to perform any of the above methods. Optionally, the storage medium is an electronic storage medium. Optionally, the storage medium is a computer-readable storage medium, but is not limited thereto, it may also be a storage medium readable by other apparatuses. Optionally, the storage medium may be a non-transitory storage medium, but is not limited thereto; it may also be a transitory storage medium.

The present disclosure further provides a program product, which, when executed by the communication device 8100, causes the communication device 8100 to perform any of the above methods. Optionally, the program product is a computer program product.

The present disclosure further provides a computer program, which, when executed on a computer, causes the computer to perform any one of the above methods.

## Claims

1. A wireless sensing method, performed by a receiver, comprising:
obtaining first information, wherein the first information is used to indicate a sensing channel state;
receiving a first reference signal sent by a transmitter; and
sensing a sensing target according to the first reference signal and the first information.

2. The method according to claim 1, wherein obtaining the first information comprises:
receiving a second reference signal, wherein the second reference signal is sent by the sensing target; and
measuring the second reference signal to obtain the first information.

3. The method according to claim 2, wherein the second reference signal is a sounding reference signal (SRS).

4. The method according to any one of claim 1, wherein obtaining the first information comprises:
receiving the first information sent by the sensing target, wherein the first information is obtained by the sensing target through measuring at least one third reference signal, and the third reference signal is sent by the transmitter.

5. The method according to claim 4, wherein a parameter of each of the at least one third reference signal is different, and the parameter comprises at least one of following: a bandwidth, a frequency-domain density, a time-domain spanning, and a time-domain density.

6. The method according to claim 4 or 5, wherein the third reference signal has at least one of following characteristics compared with the first reference signal:
a lower resource overhead, a narrower bandwidth, a lower frequency-domain density, a shorter time-domain spanning, a lower time-domain density, and fewer transmit antenna ports.

7. The method according to any one of claims 1 to 6, wherein the first information comprises at least one of following:
a delay spectrum estimation, an angle spectrum estimation, a Doppler spectrum estimation, and an eigen-spectrum estimation.

8. The method according to any one of claims 1 to 7, wherein the first information comprises at least one of following:
first N₁ delay components with highest power in the delay spectrum estimation;
first N₂ angle components with highest power in the angle spectrum estimation;
first N₃ Doppler components with highest power in the Doppler spectrum estimation;
first N₄ delay components with largest multiple signal classification (MUSIC) spectrum metric values in the delay spectrum estimation;
first N₅ angle components with largest MUSIC spectrum metric values in the angle spectrum estimation;
first N₆ Doppler components with largest MUSIC spectrum metric values in the Doppler spectrum estimation; and
eigenvectors corresponding to first N₇ largest eigenvalues in the eigen-spectrum estimation;
wherein values of N₁, N₂, N₃, N₄, N₅, N₆, and N₇ are greater than or equal to 1.

9. The method according to claim 8, wherein a value of at least one of N₁, N₂, N₃, N₄, N₅, N₆, and N₇ is 1.

10. The method according to any one of claims 1 to 9, wherein sensing the sensing target according to the first reference signal and the first information comprises:
measuring the first reference signal according to a first range, wherein the first range is determined according to the first information.

11. The method according to any one of claims 1 to 10, wherein obtaining the first information comprises:
obtaining the first information in a first time unit;
wherein sensing the sensing target according to the first reference signal and the first information comprises:
sensing the sensing target according to the first reference signal and the first information in a second time unit;
wherein the first time unit and the second time unit are respectively any one of following: an OFDM symbol, a time slot, a subframe, and a frame.

12. The method according to any one of claims 1 to 11, wherein sensing the sensing target according to the first reference signal and the first information comprises:
determining a first autocovariance according to the first information, wherein the first autocovariance is an autocovariance of a channel associated with the sensing target;
determining a second autocovariance according to the first reference signal, wherein the second autocovariance is an autocovariance of a channel comprising all direct waves and all scattered waves;
determining a third autocovariance according to the first autocovariance and the second autocovariance, wherein the third autocovariance is an autocovariance of a Type-2 clutter channel; and
sensing the sensing target according to the second autocovariance and the third autocovariance.

13. The method according to claim 12, wherein sensing the sensing target according to the second autocovariance and the third autocovariance comprises:
subtracting the third autocovariance from the second autocovariance to obtain a first calculation result; and
determining an orthogonal basis of a noise subspace according to the first calculation result and performing spectrum estimation to obtain a spectrum estimation result for indicating second information of the sensing target.

14. The method according to claim 12, wherein sensing the sensing target according to the second autocovariance and the third autocovariance comprises:
projecting the second autocovariance onto a null space of the third autocovariance to obtain a second calculation result; and
determining an orthogonal basis of a noise subspace according to the second calculation result and performing spectrum estimation to obtain a spectrum estimation result for indicating second information of the sensing target.

15. A wireless sensing method, performed by a transmitter, comprising:
sending a first reference signal, wherein the first reference signal is used by a receiver to sense a sensing target according to the first reference signal and first information, wherein the first information is used to indicate a sensing channel state.

16. The method according to claim 15, wherein the first information is obtained by the receiver through measuring a second reference signal sent by the sensing target.

17. The method according to claim 16, wherein the second reference signal is a sounding reference signal (SRS).

18. The method according to claim 15, further comprising:
sending at least one third reference signal, wherein the first information is obtained and sent by the sensing target through measuring the at least one third reference signal.

19. The method according to claim 18, wherein a transmission parameter of each of the at least one third reference signal is different, and the transmission parameter comprises at least one of following: a bandwidth, a frequency-domain density, a time-domain spanning, and a time-domain density.

20. The method according to claim 18 or 19, wherein the third reference signal has at least one of following characteristics compared with the first reference signal:
a lower resource overhead, a narrower bandwidth, a lower frequency-domain density, a shorter time-domain spanning, a lower time-domain density, and fewer transmit antenna ports.

21. The method according to any one of claims 15 to 20, wherein the first information comprises at least one of following:
a delay spectrum estimation, an angle spectrum estimation, a Doppler spectrum estimation and an eigen-spectrum estimation.

22. The method according to any one of claims 15 to 21, wherein the first information comprises at least one of following:
first N₁ delay components with highest power in the delay spectrum estimation;
first N₂ angle components with highest power in the angle spectrum estimation;
first N₃ Doppler components with highest power in the Doppler spectrum estimation;
first N₄ delay components with largest multiple signal classification (MUSIC) spectrum metric values in the delay spectrum estimation;
first N₅ angle components with largest MUSIC spectrum metric values in the angle spectrum estimation;
first N₆ Doppler components with largest MUSIC spectrum metric values in the Doppler spectrum estimation; and
eigenvectors corresponding to first N₇ largest eigenvalues in the eigen-spectrum estimation;
wherein values of N₁, N₂, N₃, N₄, N₅, N₆, and N₇ are greater than or equal to 1.

23. The method according to claim 22, wherein a value of at least one of N₁, N₂, N₃, N₄, N₅, N₆, and N₇ is 1.

24. A wireless sensing method, performed by a sensing target, comprising:
sending a second reference signal, wherein the second reference signal is used by a receiver to measure the second reference signal to obtain first information, wherein the first information is used to indicate a sensing channel state, and the first information is further used by the receiver to sense the sensing target; or
receiving at least one third reference signal, measuring the at least one third reference signal to obtain the first information, and sending the first information, wherein the third reference signal is sent by a transmitter.

25. A wireless sensing method, applied to a communication system, wherein the communication system comprises a receiver, a transmitter, and a sensing target, and the method comprises:
obtaining, by the receiver, first information, wherein the first information is used to indicate a sensing channel state;
sending, by the transmitter, a first reference signal; and
sensing, by the receiver, the sensing target according to the first reference signal and the first information.

26. A first wireless sensing apparatus, comprising:
an obtaining module, configured to obtain first information, wherein the first information is used to indicate a sensing channel state;
a receiving module, configured to receive a first reference signal sent by a transmitter; and
a sensing module, configured to sense a sensing target according to the first reference signal and the first information.

27. A second wireless sensing apparatus, comprising:
a sending module, configured to send a first reference signal, wherein the first reference signal is used by a receiver to sense a sensing target according to the first reference signal and first information, wherein the first information is used to indicate a sensing channel state.

28. A third wireless sensing apparatus, comprising:
a first sending module, or a receiving module and a measuring module and a second sending module;
wherein the first sending module is configured to send a second reference signal, wherein the second reference signal is used by a receiver to measure the second reference signal to obtain first information, wherein the first information is used to indicate a sensing channel state, and the first information is further used by the receiver to sense the sensing target;
wherein the receiving module is configured to receive at least one third reference signal;
wherein the measuring module is configured to measure the at least one third reference signal to obtain the first information, wherein the third reference signal is sent by a transmitter; and
wherein the second sending module is configured to send the first information.

29. A communication device, comprising:
one or more processors;
wherein the processor is configured to call computer instructions to cause the communication device to perform the wireless sensing method according to any one of claims 1 to 14, claims 15 to 23, or claims 24 to 25.

30. A communication system, comprising a receiver, a transmitter, and a sensing target, wherein the receiver is configured to implement the wireless sensing method according to any one of claims 1 to 14, the transmitter is configured to implement the wireless sensing method according to any one of claims 15 to 23, and the sensing target is configured to implement the wireless sensing method according to any one of claims 24 to 25.

31. A storage medium, wherein the storage medium stores instructions, wherein the instructions, when executed on a communication device, cause the communication device to perform the wireless sensing method according to any one of claims 1 to 14, claims 15 to 23, or claims 24 to 25.
